# EUROPEAN PATENT APPLICATION

(11) **EP 4 617 333 A1**
(43) Date of publication of application: **17.09.2025**
(21) Application number: 23888537.0
(22) Date of filing: 27.10.2023
(51) Int. Cl.: C09D 11/322, B41J 2/01, B41M 5/00, C09D 11/326, C09D 11/36

(54) **NONAQUEOUS INK COMPOSITION, RECORDING METHOD, METHOD FOR PRODUCING RECORDED MATERIAL, INK SET, RECORDED MATERIAL, AND INKJET RECORDING APPARATUS**

(30) Priority: 11.11.2022 JP 2022180976
(71) Applicant: DNP Fine Chemicals Co., Ltd., Yokohama-shi, Kanagawa 226-0022 (JP)
(72) Inventor: YAMAZAKI Fumie, Yokohama-shi, Kanagawa 226-0022 (JP); YOSHIMORI Keishiro, Yokohama-shi, Kanagawa 226-0022 (JP); ORIKASA Yuka, Yokohama-shi, Kanagawa 226-0022 (JP); TAMURA Mitsuyoshi, Yokohama-shi, Kanagawa 226-0022 (JP)
(74) Representative: Hasegawa, Kan
(86) International application number: PCT/JP2023/038900
(87) International publication number: WO 2024/101189

(57) **Abstract**

The present invention provides a nonaqueous ink composition which exhibits high storage stability and high ejection stability even if a pigment having a specific structure is contained therein, and which is suitable for use as a nonaqueous ink composition that is ejected by an inkjet method.

This nonaqueous ink composition is to be ejected by an inkjet method and contains a pigment, a pigment dispersant, an organic solvent, and a resin that is different from the pigment dispersant; the pigment contains a pigment having a specific structure; the content of the pigment dispersant is lower than the content of the pigment; and the content of the resin is higher than the content of the pigment.

## Description

### TECHNICAL FIELD

The present invention relates to a nonaqueous ink composition, a recording method, a method for producing a recorded material, an ink set, a recorded material, and an inkjet recording apparatus.

### BACKGROUND ART

Ink compositions that are widely used include aqueous ink compositions obtained by dissolving or dispersing coloring materials in water or a mixture of water and an organic solvent, and nonaqueous ink compositions obtained by dissolving or dispersing coloring materials in an organic solvent that does not contain water.

For example, Patent Document 1 discloses an ink composition for inkjet-recording including a copper complex dye (copper phthalocyanine), in which a free copper ion concentration is 10 ppm or less. Patent Document 1 mentions that this ink composition including no precipitates and having high levels of various properties required for inkjet recording ink compositions.

Furthermore, Patent Document 2 also discloses technology relating to a nonaqueous inkjet ink set (ink set) that includes a blue ink (ink composition) including coloring materials such as C.I. Pigment Blue 60 and C.I. Pigment Violet 23. According to Patent Document 2, this non-aqueous inkjet ink set (ink set) has excellent ejection stability during continuous printing, and can produce printed materials with high resolution and wide color gamut.

In this way, coloring materials having a phthalocyanine structure, C.I. Pigment Blue 60, and C.I. Pigment Violet 23 are used as coloring materials in ink compositions ejected by an inkjet method.

### Citation List

### Patent Document

Patent Document 1: Japanese Unexamined Patent Application, Publication No. 2000-355665
Patent Document 2: Japanese Unexamined Patent Application, Publication No. 2022-140467

### DISCLOSURE OF THE INVENTION

### Problems to be Solved by the Invention

As mentioned above, phthalocyanine pigments having a phthalocyanine structure and pigments having a specific structure such as C.I. Pigment Blue 60 and C.I. Pigment Violet 23 are known.

However, in nonaqueous ink compositions including these pigments having predetermined structures, study by the present inventors has revealed the problem that the pigments easily precipitate in the nonaqueous ink composition, which may lead to poor storage stability and inkjet ejection stability, or insufficient abrasion resistance of the printed material, and as a result, the properties required for the nonaqueous ink composition may not be satisfied.

An object of the present invention is to provide a nonaqueous ink composition exhibiting high storage stability and high ejection stability even when nonaqueous ink composition includes a pigment having a predetermined structure is used, and being suitably used as a nonaqueous ink composition ejected by an inkjet method.

### Means for Solving the Problems

The present inventors have intensively studied for solving the above-mentioned problems, and as a result, have found that the above-mentioned problems can be solved by setting the content ratio of a pigment and a pigment dispersant and the content ratio of the pigment and a resin in a predetermined range, and have completed the present invention. Specifically, the present invention provides the following.
(1) A nonaqueous ink composition containing a pigment, a pigment dispersant, an organic solvent, a resin different from the pigment dispersant, and being ejected by an inkjet method, the pigment containing at least one or more pigments selected from the group consisting of a pigment A1 represented by the following formula (1), a pigment A2 represented by the following formula (2), and a pigment A3 represented by the following formula (3), a content of the pigment dispersant is smaller than a content of the pigment, and a content of the resin is greater than the content of the pigment. 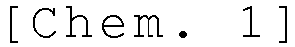 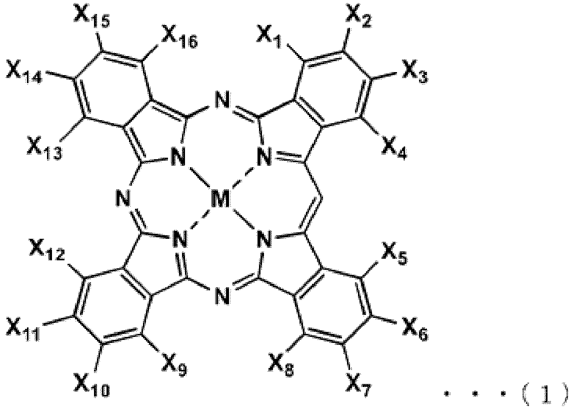 (In the formula (1), X₁ to X₁₆ each independently represent a halogen atom or a hydrogen atom; and M represents a metal atom optionally including two hydrogen atoms or a ligand.) 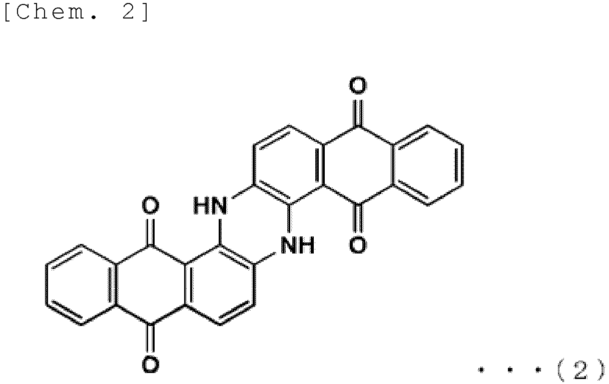 ... (2) 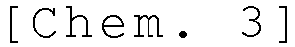 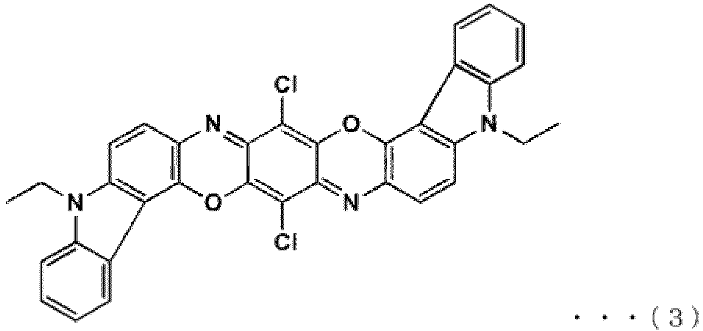
(2) The nonaqueous ink composition described in (1), wherein the content of the resin is greater than a total content of the pigment, the pigment dispersant, and a surfactant different from the resin.
(3) The nonaqueous ink composition described in (1) or (2), wherein the content of the pigment is 1.0% by mass or more.
(4) The nonaqueous ink composition described in any one of (1) to (3), wherein the content of the resin is greater than the content of the pigment dispersant.
(5) The nonaqueous ink composition described in any one of (1) to (4), wherein (the content of the pigment dispersant)/the content of the resin) is less than 0.8.
(6) The nonaqueous ink composition described in any one of (1) to (5), wherein (the content of the pigment dispersant)/(the content of the pigment) is less than 0.45.
(7) The nonaqueous ink composition described in any one of (1) to (6), wherein a content of water in the ink composition is 0.5% by mass or less.
(8) A recording method including ejecting the nonaqueous ink composition described in any one of (1) to (7) to a surface of a base material by an inkjet method.
(9) A method for producing a recorded material, the method including ejecting the nonaqueous ink composition described in any one of (1) to (7) to a surface of a base material by an inkjet method.
(10) An ink set including at least the nonaqueous ink composition described in any one of (1) to (7).
(11) A recorded material including a layer of the nonaqueous ink composition described in any one of (1) to (7), formed on a surface of a base material.
(12) An inkjet recording apparatus including a storage container filled with the nonaqueous ink composition described in any one of (1) to (7).

### Effects of the Invention

The nonaqueous ink composition of the present invention satisfies the properties required for a nonaqueous ink composition to be ejected by an inkjet method, even when a pigment having a predetermined structure is used as a pigment.

### PREFERRED MODE FOR CARRYING OUT THE INVENTION

Hereinafter, specific embodiments of the present invention are described in detail, but the present invention is not limited to the following embodiments, and can be modified and carried out appropriately within the scope of the invention.

### <<1. Nonaqueous ink composition>>

The nonaqueous ink composition according to this embodiment is a nonaqueous ink composition that contains a pigment, a pigment dispersant, an organic solvent, and a resin different from the pigment dispersant, and is ejected by an inkjet method. Herein, the term "nonaqueous ink composition" refers to an ink composition that includes an organic solvent and intentionally does not contain water, unlike an aqueous ink composition that includes water as a main component.

The pigment contained in this nonaqueous ink composition contains at least one or more pigments selected from the group consisting of a pigment A1 represented by the following formula (1), a pigment A2 represented by the following formula (2), and a pigment A3 represented by the following formula (3), in which a content of the pigment dispersant included in the nonaqueous ink composition is smaller than a content of the pigment included in the nonaqueous ink composition, and a content of the resin (binder resin different from the pigment dispersant) is greater than the content of the pigment. 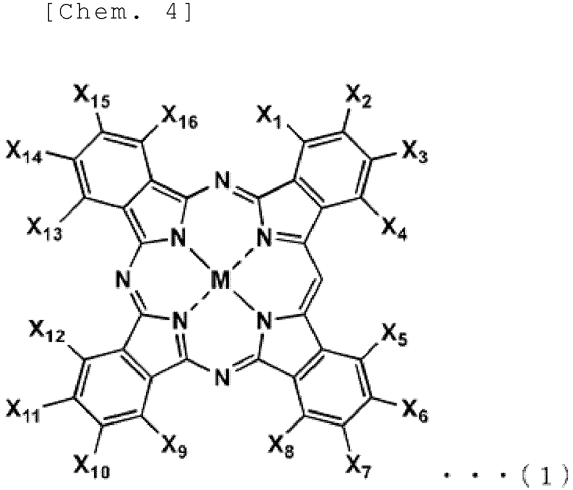 (In the formula (1), X₁ to X₁₆ each independently represent a halogen atom or a hydrogen atom; and M represents a metal atom optionally including two hydrogen atoms or a ligand.)

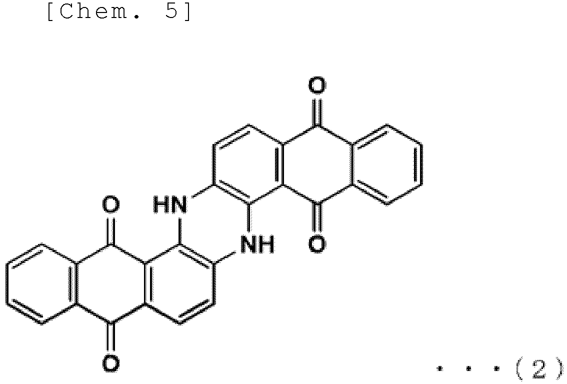

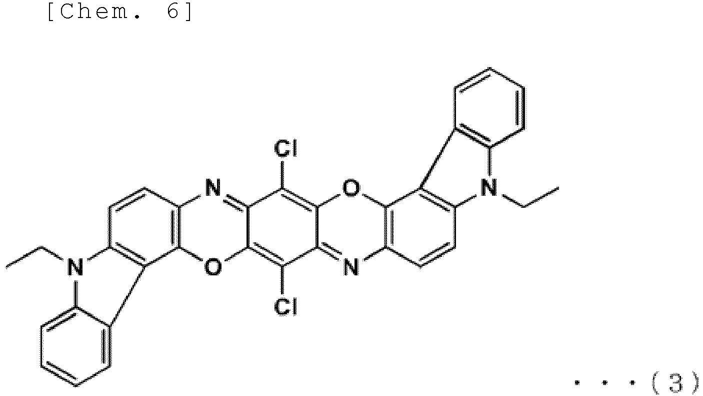

When the content of the pigment dispersant is smaller than the content of the pigment (less than the content of the pigment), the properties required for a nonaqueous ink composition to be ejected by the inkjet method can be satisfied, for example, glossiness and coating resistance of a printed surface of the resulting printed material are improved.

Furthermore, when the content of the resin (binder resin different from the pigment dispersant) is greater than the content of the pigment (exceeding the content of the pigment), the properties required for a nonaqueous ink composition to be ejected by the inkjet method can be satisfied, for example, glossiness and coating resistance of a printed surface of the resulting printed material are improved.

The content of water in the nonaqueous ink composition according to this embodiment is preferably 0.5% by mass or less, more preferably 0.3% by mass or less, and even more preferably 0.1% by mass or less, in the total amount of the nonaqueous ink composition. Since the pigments A1, A2, and A3, each having a predetermined structure, are highly hydrophobic, nonaqueous inkjet compositions including these pigments tend to relatively easily suffer from deterioration in pigment dispersibility and storage stability by contact with water. By reducing the content of water in the nonaqueous ink composition so as to include as little water as possible (intentionally preventing water from being included), storage stability, ejection stability, and the like, can be improved.

Next, each component included in the nonaqueous ink composition according to this embodiment will be described.

### [Pigment]

The nonaqueous ink composition according to this embodiment contains a pigment. The pigment contains at least one or more pigments selected from the group consisting of a pigment A1 represented by the following formula (1), a pigment A2 represented by the following formula (2), and a pigment A3 represented by the following formula (3). 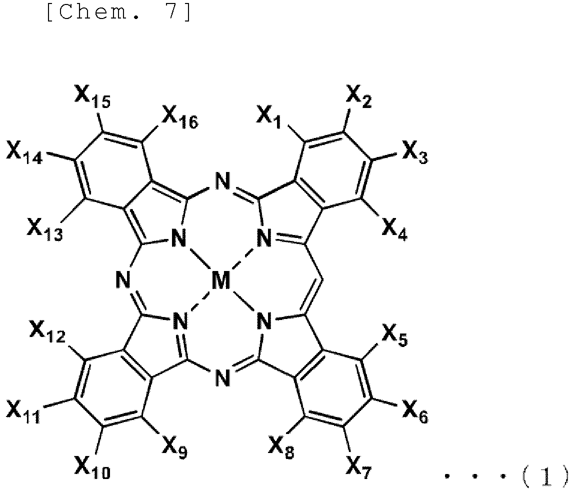 (In the formula (1), X₁ to X₁₆ each independently represent a halogen atom or a hydrogen atom; and M represents a metal atom optionally including two hydrogen atoms or a ligand.)

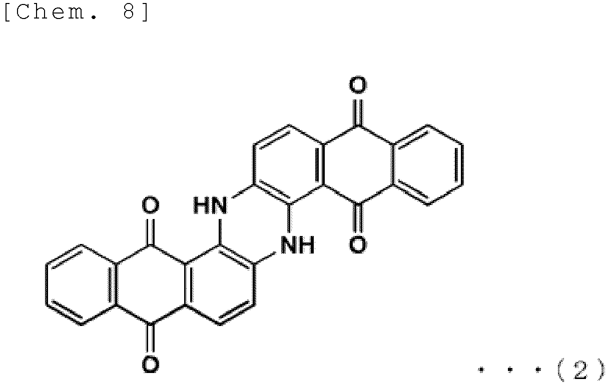

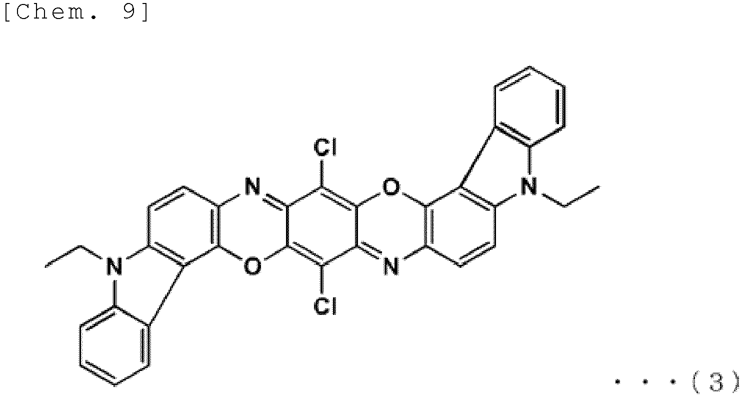

Since such pigments A1, A2, and A3 have weather resistance, the weather resistance of printed material obtained with nonaqueous ink compositions containing pigments A1, A2, and A3 can also be improved. Furthermore, since the content of the pigment dispersant is smaller than the content of the pigment, properties required for a nonaqueous ink composition to be ejected by the inkjet method can be improved.

The substituents (X₁ to X₁₆) in the benzene ring in the molecular structure of the pigment A1 may be changed as appropriate. A method for changing the type of the substituents (X₁ to X₁₆) includes dispersing a pigment in an organic solvent and introducing a desired substituent with an additive capable of introducing a specific substituent. For example, preparation can be carried out by the method described in Japanese Patent No. 2993392. When the type of the substituents (X₁ to X₁₆) in the benzene ring is changed, a substitution position is not particularly limited, and any substitution in any of 16 substituent positions on the benzene ring may be changed, and the number of the substituents is also not particularly limited.

The volume-based cumulative 50% particle diameter (D50) of the pigment A1, the pigment A2, and the pigment A3 is not particularly limited, but the lower limit of the volume-based cumulative 50% particle diameter (D50) is preferably 30 nm or more, more preferably 40 nm or more, and even more preferably 50 nm or more. This improves the weather resistance of the pigment A1, pigment A2, and pigment A3. The upper limit of the volume-based cumulative 50% particle diameter (D50) of the pigment A1, the pigment A2, and the pigment A3 is preferably 150 nm or less, more preferably 140 nm or less, and even more preferably 130 nm or less. A range of the volume-based cumulative 50% particle diameter (D50) of the pigment A1, the pigment A2, and the pigment A3 is preferably 30 nm or more and 150 nm or less, more preferably 40 nm or more and 140 nm or less, and even more preferably 50 nm or more and 130 nm or less. By setting the volume-based cumulative 50% particle diameter (D50) of the pigment A1, the pigment A2, and the pigment A3 in this range, the storage stability of the nonaqueous ink composition can be improved. Note that in this specification, the "volume-based cumulative 50% particle diameter (D50) (also simply referred to as D50)" refers to the particle diameter at which the cumulative volume calculated from the small diameter side is 50%. Note that the volume-based cumulative 50% particle diameter (D50) of a pigment can be measured using a particle diameter distribution measuring device (such as a particle size analyzer, NANOTRACWAVE, manufactured by MicrotracBEL Corp.).

The volume-based cumulative 90% particle diameter (also simply referred to as D90) of the pigment A1, the pigment A2, and the pigment A3 is not particularly limited, but the lower limit of the volume-based cumulative 90% particle diameter (D90) is preferably 50 nm or more, more preferably 60 nm or more, and even more preferably 70 nm or more. This improves the weather resistance of the pigment A1, the pigment A2, and the pigment A3. The upper limit of the volume-based cumulative 90% particle diameter (D90) of the pigment A1, the pigment A2, and the pigment A3 is preferably 300 nm or less, more preferably 290 nm or less, and even more preferably 280 nm or less. A range of the volume-based cumulative 90% particle diameter (D90) of the pigment A1, the pigment A2, and the pigment A3 is preferably 50 nm or more and 300 nm or less, more preferably 60 nm or more and 290 nm or less, and even more preferably 70 nm or more and 280 nm or less. By setting the volume-based cumulative 90% particle diameter (D90) of the pigment A1, the pigment A2, and the pigment A3 in this range, the storage stability of the nonaqueous ink composition can be improved. Note that in this specification, the "volume-based cumulative 90% particle diameter (D90) (also simply referred to as D90)" refers to the particle diameter at which the cumulative volume calculated from the small diameter side is 90%. Note that the volume-based cumulative 90% particle diameter (D90) of a pigment can be measured using a particle diameter distribution measuring device (such as a particle size analyzer, NANOTRACWAVE, manufactured by MicrotracBEL Corp.).

The total content of the pigment A1, the pigment A2, and the pigment A3 is not particularly limited, but the lower limit of the total content of the pigment A1, the pigment A2, and the pigment A3 is preferably 0.1% by mass or more, more preferably 0.3% by mass or more, even more preferably 0.5% by mass or more, even more preferably 1.0% by mass or more, particularly preferably 2.0% by mass or more, and most preferably 3.0% by mass or more, in the total amount of the nonaqueous ink composition. When the total content of the pigment A1, the pigment A2, and the pigment A3 is 0.1% by mass or more in the total amount of the nonaqueous ink composition, the print density can be improved, and a color reproduction range of a recorded material obtained by combining with nonaqueous ink compositions of other colors can be widened. Furthermore, the upper limit of the total content of the pigment A1, the pigment A2, and the pigment A3 is preferably 8.0% by mass or less, more preferably 6.0% by mass or less, and even more preferably 5.0% by mass or less in the total amount of the nonaqueous ink composition. When the total content of the pigment A1, the pigment A2, and the pigment A3 is 8.0% by mass or less in the total amount of the nonaqueous ink composition, the content of other additives can be relatively increased, the dispersion stability of the pigment A1, the pigment A2, and the pigment A3 can be improved, and the increase in viscosity due to an increase in the content of the pigments can further be suppressed, and thereby, clogging of a nozzle of an inkjet head can be suppressed. The range of the total content of the pigment A1, the pigment A2, and the pigment A3 is preferably 0.1% by mass or more and 8.0% by mass or less, more preferably 0.3% by mass or more and 6.0% by mass or less, and even more preferably 0.5% by mass or more and 5.0% by mass or less, in the total amount of the nonaqueous ink composition.

Examples of the pigment A1 represented by the formula (1) include phthalocyanine pigments and halogenated phthalocyanine pigments. The halogenated phthalocyanine pigment refers to a pigment in which at least one of X₁ to X₁₆ is replaced with a halogen atom. That is, the halogenated phthalocyanine pigment is a pigment having a structure in which a total of the halogen atom is bonded to at least one phthalocyanine molecule and at most 16 halogen atoms are bonded to one phthalocyanine molecule. Note that the halogenated phthalocyanine pigment with more halogen groups is closer to green. The number of halogen atoms substituted on the halogenated phthalocyanine pigment is preferably 1 or more, more preferably 8 or more, more preferably 12 or more, and even more preferably 14 or more, in order to exhibit a green hue.

The pigment A1 may be a metal phthalocyanine pigment in which the center M of the phthalocyanine skeleton is two hydrogen atoms, or M is a metal atom. When M is a metal atom, the type of metal is not particularly limited, but M is particularly desirably manganese (Mn), iron (Fe), cobalt (Co), nickel (Ni), copper (Cu), zinc (Zn), magnesium (Mg), lead (Pb), or aluminum (Al). Furthermore, when M is a metal atom, M may have a ligand.

Specific examples of such phthalocyanine pigments (including halogenated phthalocyanine pigments, metal phthalocyanine pigments, and halogenated metal phthalocyanine pigments) include C.I. Pigment Blue 15:6, C.I. Pigment Green 7, 36, 58, 59, 62, and 63, and the like. Phthalocyanine pigment A (including halogenated phthalocyanine pigments, metal phthalocyanine pigments, and halogenated metal phthalocyanine pigments) may be produced by a conventionally known method, or may be a commercially available product such as FASTGEN BLUE AE-8K (C.I. Pigment Blue 15:6) manufactured by DIC Corporation, FASTGEN GREEN 2YK (C.I. Pigment Green 36) manufactured by DIC Corporation, Cyanine Green 5370 (C.I. Pigment Green 36) manufactured by Dainichiseika Color & Chemicals Mfg. Co., Ltd., FASTGEN GREEN 5740 (C.I. Pigment Green 7) manufactured by DIC Corporation, or Fastogen GREEN A110 (C.I. Pigment Green 58) manufactured by DIC Corporation.

The pigment A2 represented by the formula (2) is an indanthrone, and a specific example thereof can include C.I. Pigment Blue 60.
C.I. Pigment Blue 60 may be produced by a conventionally known method, or may be a commercially available product such as LIONOGEN BLUE 6520 (C.I. Pigment Blue 60) manufactured by Toyo Color Co., Ltd. or Corimax Blue A3R (C.I. Pigment Blue 60) manufactured by Zeya Chemicals Co., Ltd.

An example of the pigment A3 represented by the formula (3) can include C.I. Pigment Violet 23. C.I. Pigment Violet 23 may be produced by a conventionally known method, or may be a commercially available product such as FASTOGEN SUPER VIOLET RSP (C.I. Pigment Violet 23) manufactured by DIC Corporation, or FASTOGEN SUPER VIOLET LBP-01, 02, 04 (C.I. Pigment Violet 23) manufactured by DIC Corporation.

Note that the nonaqueous ink composition according to this embodiment may further contain coloring materials (including pigments and dyes) other than the above-mentioned pigments A1, A2, and A3. Examples of such coloring materials include pigments and dyes with similar structures and hues (cyan, green, and yellow) to those of the pigments A1, A2, and A3.

Examples of organic pigments by the color index (C.I.) number include C.I. Pigment Blue 15, 15:1, 15:3, 15:4, 15:6, 16, 17, 22, 60, 64, 75, 76, 79, C.I. Pigment Yellow 1, 2, 3, 12, 13, 14, 16, 17, 20, 24, 73, 74, 75, 83, 93, 95, 97, 98, 109, 110, 114, 117, 120, 125, 128, 129, 130, 137, 138, 139, 147, 148, 150, 151, 153, 154, 155, 166, 168, 180, 185, 213, 214, and the like.

The content of the pigment (all pigments included in the nonaqueous ink composition) is not particularly limited, but the lower limit of the content of the pigment is preferably 0.1% by mass or more, more preferably 0.3% by mass or more, even more preferably 0.5% by mass or more, even more preferably 1.0% by mass or more, particularly preferably 2.0% by mass or more, and most preferably 3.0% by mass or more, in the total amount of the nonaqueous ink composition. When the content of the pigment is 0.1% by mass or more in the total amount of the nonaqueous ink composition, the print density can be improved, and a color reproduction range of a recorded material obtained by combining with nonaqueous ink compositions of other colors can be enhanced. Furthermore, the upper limit of the total content of the pigment is preferably 8.0% by mass or less, more preferably 6.0% by mass or less, and even more preferably 5.0% by mass or less. When the total content of the pigment is 8.0% by mass or less in the total amount of the nonaqueous ink composition, the content of other additives can be relatively increased, the dispersion stability of the pigments can be improved, and the increase in viscosity due to an increase in the content of the pigments can further be suppressed, and thereby, clogging of a nozzle of an inkjet head can be suppressed. The range of the content of the pigments (all pigments included in the nonaqueous ink composition) is preferably 0.1% by mass or more and 8.0% by mass or less, more preferably 0.3% by mass or more and 6.0% by mass or less, and even more preferably 0.5% by mass or more and 5.0% by mass or less, in the total amount of the nonaqueous ink composition.

In the present invention, the content of the pigment (total content of the pigments included in the nonaqueous ink composition) is preferably greater than the sum of the content of the pigment dispersant (total content of the pigment dispersants included in the nonaqueous ink composition) and the content of the surfactant (total content of the surfactants included in the nonaqueous ink composition). The ratio of the sum of the content of the pigment dispersant (total content of the pigment dispersants included in the nonaqueous ink composition) and the content of the surfactant (total content of the surfactants included in the nonaqueous ink composition) to the content of the pigment (total content of the pigments included in the nonaqueous ink composition) in the nonaqueous ink composition, ((pigment dispersant + surfactant)/pigment), is preferably less than 1.0, more preferably less than 0.8, and even more preferably less than 0.6. The lower limit value is preferably 0.1 or more, more preferably 0.2 or more, and even more preferably 0.3 or more. The ratio of the sum of the content of the pigment dispersant (total content of the pigment dispersant included in the nonaqueous ink composition) and the content of the surfactant (total content of the surfactant included in the nonaqueous ink composition) to the content of the pigment (total content of the pigment included in the nonaqueous ink composition) in the nonaqueous ink composition, ((pigment dispersant + surfactant)/pigment), is preferably 0.1 or more and less than 1.0, more preferably 0.2 or more and less than 0.8, and even more preferably 0.3 or more and less than 0.6.

In the present invention, the total content of the pigment A1, the pigment A2, and the pigment A3 is preferably greater than the sum of the content of the pigment dispersant (total content of the pigment dispersants included in the nonaqueous ink composition) and the content of the surfactant (total content of the surfactants included in the nonaqueous ink composition). The ratio of the sum of the content of the pigment dispersant (total content of the pigment dispersant included in the nonaqueous ink composition) and the content of the surfactant (total content of the surfactant included in the nonaqueous ink composition) to the total content of the pigment A1, the pigment A2, and the pigment A3 in the nonaqueous ink composition, ((pigment dispersant + surfactant)/(pigment A1 + pigment A2 + pigment A3), is preferably less than 1.0, more preferably less than 0.8, and even more preferably less than 0.6. The lower limit value is preferably 0.1 or more, more preferably 0.2 or more, and even more preferably 0.3 or more. The ratio of the sum of the content of the pigment dispersant (total content of the pigment dispersant included in the nonaqueous ink composition) and the content of the surfactant (total content of the surfactants included in the nonaqueous ink composition) to the total content of the pigment A1, the pigment A2, and the pigment A3 in the nonaqueous ink composition, ((pigment dispersant + surfactant)/(pigment A1 + pigment A2 + pigment A3)), is preferably 0.1 or more and less than 1.0, more preferably 0.2 or more and less than 0.8, and even more preferably 0.3 or more and less than 0.6.

Furthermore, a dispersion aid (pigment derivative) described below may be used together with the pigment dispersant. This improves the dispersion stability of the pigment, and thereby can improve the storage stability of the nonaqueous ink composition.

### [Pigment dispersant]

The nonaqueous ink composition according to this embodiment contains a pigment dispersant. Herein, the pigment dispersant (also referred to as a coloring material dispersant) means a resin or a surfactant having a function of improving the dispersibility of the pigment in the nonaqueous ink composition by being attached to a part of the pigment surface. The content of the pigment dispersant is characterized by being smaller than the content of the pigment contained in the nonaqueous ink composition. This makes it possible to suppress aggregation of the pigments (the pigment A1, the pigment A2, and the pigment A3) included in the nonaqueous ink composition. Thus, the properties required for a nonaqueous ink composition to be ejected by the inkjet method can be satisfied, for example, glossiness of a printed surface of the obtained printed material is improved. Note that the content of the pigment dispersant is preferably smaller than the total content of the pigment A1, the pigment A2, and the pigment A3.

The ratio (pigment dispersant/total pigment) of the content of the pigment dispersant to the total pigment content (total content of the pigments included in the nonaqueous ink composition) in the nonaqueous ink composition is preferably less than 1.0, more preferably less than 0.8, even more preferably less than 0.7, even more preferably less than 0.6, and particularly preferably less than 0.45. The lower limit is preferably 0.1 or more, more preferably 0.2 or more, and even more preferably 0.3 or more. The ratio (pigment dispersant/total pigment) of the content of the pigment dispersant to the content of the total pigment (total content of the pigments included in the nonaqueous ink composition) in the nonaqueous ink composition is preferably 0.1 or more and less than 1.0, more preferably 0.2 or more and less than 0.8, and even more preferably 0.3 or more and less than 0.7. The ratio (pigment dispersant/(pigment A1 + pigment A2 + pigment A3)) of the content of the pigment dispersant to the total content of the pigment A1, the pigment A2, and the pigment A3 in the nonaqueous ink composition is preferably less than 1.0, more preferably less than 0.8, even more preferably less than 0.7, even more preferably less than 0.6, and particularly preferably less than 0.45. The lower limit is preferably 0.1 or more, more preferably 0.2 or more, and even more preferably 0.3 or more. The ratio (pigment dispersant/(pigment A1 + pigment A2 + pigment A3)) of the content of the pigment dispersant to the total content of the pigment A1, the pigment A2, and the pigment A3 in the nonaqueous ink composition is preferably 0.1 or more and less than 1.0, more preferably 0.2 or more and less than 0.8, and even more preferably 0.3 or more and less than 0.7.

As the pigment dispersant, any dispersant used in nonaqueous ink compositions can be used. As the pigment dispersant, a high molecular dispersant is preferably used. The high molecular dispersants including polyester, polyacrylic, polyurethane, polyamine, polycaprolactone, and the like, as a main chain, and includes polar groups such as an amino group, a carboxyl group, a sulfone group, and a hydroxyl group, as side chain, are used. Among these, by using a high molecular dispersant including a polycaprolactone-based polymer dispersant, aggregation of the perinone pigment included in the nonaqueous ink composition can be suppressed more effectively.

Examples of the polyacrylic dispersants to be used include Disperbyk-2000, 2001, 2008, 2009, 2010, 2020, 2020N, 2022, 2025, 2050, 2070, 2095, 2150, 2151, 2155, 2163, 2164, BYKJET-9130, 9131, 9132, 9133, and 9151 (manufactured by BYK-Chemie), EfkaPX4310, PX4320, PX4330, PA4401, 4402, PA4403, 4570, 7411, 7477, PX4700, and PX4701 (manufactured by BASF), TREPLUS D-1200, D-1410, D-1420, and MD-1000 (manufactured by Otsuka Chemical Co., Ltd. ), FLOWRENE DOPA-15BHFS, 17HF, 22, G-700, 900, NC-500, and GW-1500 (manufactured by Kyoeisha Chemical Co., Ltd.), and the like. Examples of the polycaprolactone dispersants to be used include Ajisper PB821, PB822, and PB881 (manufactured by Ajinomoto Fine-Techno Co., Ltd.), Hinoact KF-1000, T-6000, T-7000, T-8000, T-8000E, and T-9050 (manufactured by Kawaken Fine Chemical Co., Ltd.), Solsperse20000, 24000, 32000, 32500, 32550, 32600, 33000, 33500, 34000, 35200, 36000, 37500, 39000, 71000, 76400, 76500, 86000, 88000, J180, and J200 (manufactured by Lubrizol), TEGO Dispers652, 655, 685, 688, and 690 (manufactured by Evonik Japan), and the like. Preferable example of the dispersants to be used include BYKJET-9130, 9131, 9132, 9133, 9151, EfkaPX4310, PX4320, PX4330, PX4700, PX4701, Solsperse20000, 24000, 32000, 33000, 33500, 34000, 35200, 39000, 71000, 76500, 86000, 88000, J180, J200, TEGO Dispers655, 685, 688, 690, and the like. These can be used alone or in mixtures.

In particular, when a substituent that exhibits acidic to weakly basic is introduced into a benzene ring in the molecular structure of the pigment (for example, when a substituent (X₁ to X₁₆) that exhibits acidic to weakly basic is introduced into the benzene ring in the molecular structure of the pigment A), it is preferable to use a pigment dispersant having a basic group among the above. When a pigment dispersant having a basic group is used, aggregation of the pigment in the nonaqueous ink composition can be suppressed.

Among these, it is preferable to use a pigment dispersant with an amine value in a range of 20 mgKOH/g or more and 100 mgKOH/g or less. This can suppress aggregation of the pigment A in the nonaqueous ink composition more effectively. In particular, when the pH of the pigment is 8 or less (preferably when the pH is 7 or less), since a pigment dispersant with an amine value in a predetermined range is more likely to be attached the pigment surface, aggregation of the pigment A in the nonaqueous ink composition can be effectively suppressed.

Furthermore, a weight average molecular weight of these pigment dispersants is preferably 1,000 or more, more preferably 3,000 or more, and even more preferably 5,000 or more. When a pigment dispersant having a high molecular weight is used, the aggregation of the pigment A can be effectively suppressed, the aggregation of the pigment A can be effectively suppressed in the nonaqueous ink composition, and the storage stability of the nonaqueous ink composition can be made good. Furthermore, coating resistance of a printed material can be made good.

The content of the pigment dispersant is preferably 5.0% by mass or less, more preferably 3.0% by mass or less, and even more preferably 2.0% by mass or less, in the total amount of the nonaqueous ink composition. The content of the pigment dispersant is preferably 0.1% by mass or more, more preferably 0.2% by mass or more, even more preferably 0.3% by mass or more, even more preferably 0.5% by mass or more, and particularly preferably 1.0% by mass or more, in the total amount of the nonaqueous ink composition. The content of the pigment dispersant is preferably 0.1% by mass or more and 5.0% by mass or less, more preferably 0.2% by mass or more and 3.0% by mass or less, even more preferably 0.3% by mass or more and 2.0% by mass or less, even more preferably 0.5% by mass or more and 2.0% by mass or less, and particularly preferably 1.0% by mass or more and 2.0% by mass or less, in the total amount of the nonaqueous ink composition.

### [Dispersion aid]

A dispersion aid may be used as necessary in the nonaqueous ink composition according to this embodiment. The dispersion aid is adsorbed to the surface of the coloring material (pigment), and the functional group enhances the affinity with the organic solvent and the dispersant in the nonaqueous ink composition, thereby improving the dispersion stability. As the dispersion aid, the pigment derivative described above are preferable, and well-known pigment derivative having a functional group such as an acidic group, a basic group, and a neutral group in an organic pigment residue can be used.

### [Resin]

The nonaqueous ink composition according to this embodiment contains a resin (binder resin) different from the pigment dispersant. The content of this resin (binder resin) is greater than the content of the pigment contained in the nonaqueous ink composition. In addition to the content of the pigment dispersant being less than the content of the pigment, when the content of the resin (binder resin) is greater than the content of the pigment, the aggregation of the pigment included in the nonaqueous ink composition can be suppressed, and the properties required for a nonaqueous ink composition to be ejected by the inkjet method can be satisfied, for example, glossiness and coating resistance of a printed surface of the resulting printed material are improved. Furthermore, by containing a resin (binder resin), the fixability, water resistance, and stretchability of the layer formed by the nonaqueous ink composition can be improved. Note that the content of the resin is preferably greater than the total content of the pigment A1, the pigment A2, and the pigment A3. Furthermore, in this specification, the "resin" mainly refers to a binder resin that imparts abrasion resistance to a layer of the nonaqueous ink composition (recorded material), and is different from the dispersant (high molecular dispersant) that contains the coloring material (pigment) described above and high molecular surfactants such as a surfactant having a siloxane skeleton, which will be described later.

In the nonaqueous ink composition according to this embodiment, the ratio (pigment/resin) of the content of the pigment (total content of the pigments included in the nonaqueous ink composition) to the content of the resin (binder resin not including a pigment dispersant) (total content of the resins included in the nonaqueous ink composition) in the nonaqueous ink composition is preferably less than 1.0, more preferably less than 0.8, even more preferably less than 0.7, and particularly preferably less than 0.6. The lower limit value is preferably 0.3 or more, and more preferably 0.4 or more. The ratio (pigment/resin) of the content of the pigment (total content of the pigments included in the nonaqueous ink composition) to the content of the resin (binder resin not including a pigment dispersant) (total content of the resins included in the nonaqueous ink composition) is preferably 0.3 or more and less than 1.0, more preferably 0.4 or more and less than 0.8, even more preferably 0.4 or more and less than 0.7, and particularly preferably 0.4 or more and less than 0.6. In the nonaqueous ink composition according to this embodiment, the ratio of the total content of the pigment A1, the pigment A2, and the pigment A3 to the content of the resin (binder resin not including pigment dispersant) ((pigment A1 + pigment A2 + pigment A3)/resin) in the nonaqueous ink composition is preferably less than 1.0, more preferably less than 0.8, even more preferably less than 0.7, and particularly preferably less than 0.6. The lower limit is preferably 0.3 or more, and more preferably 0.4 or more. In the nonaqueous ink composition according to this embodiment, the ratio of the total content of the pigment A1, the pigment A2, and the pigment A3 to the content of the resin (binder resin not including pigment dispersant) ((pigment A1 + pigment A2 + pigment A3)/resin) is preferably 0.3 or more and less than 1.0, more preferably 0.4 or more and less than 0.8, even more preferably 0.4 or more and less than 0.7, and particularly preferably 0.4 or more and less than 0.6.

In the nonaqueous ink composition according to this embodiment, the content of the resin (binder resin not including a pigment dispersant) (total content of the resin included in the nonaqueous ink composition) is preferably greater than the sum of the content of the pigment (total content of the pigment included in the nonaqueous ink composition), the content of the pigment dispersant (total content of the pigment dispersant included in the nonaqueous ink composition), and the content of the surfactant (the total content of the surfactant included in the nonaqueous ink composition). When the resin is contained in an amount greater than the content of the pigment, the pigment dispersant, and the surfactant, aggregation of the pigment included in the nonaqueous ink composition can be suppressed more effectively, and the properties required for a nonaqueous ink composition to be ejected by the inkjet method can be satisfied, for example, glossiness and coating resistance of a printed surface of the resulting printed material are improved.

In the nonaqueous ink composition according to this embodiment, the content of the resin (binder resin not including a pigment dispersant) (total content of the resin included in the nonaqueous ink composition) is preferably greater than the content of the pigment dispersant (the total content of the pigment dispersant included in the nonaqueous ink composition). When a resin is contained in an amount greater than the content of the pigment dispersant, the glossiness of the printed surface of the resulting printed material is further improved, and the coloring property, abrasion resistance, or solvent resistance becomes excellent, so that the properties required for a nonaqueous ink composition to be ejected by the inkjet method are further satisfied.

Specifically, the ratio (pigment dispersant/resin) of the content of the pigment dispersant (total content of the pigment dispersant included in the nonaqueous ink composition) to the content of the resin (binder resin not including a pigment dispersant) (total content of the resin included in the nonaqueous ink composition) in the nonaqueous ink composition is preferably less than 1.0, more preferably less than 0.8, even more preferably less than 0.7, particularly preferably less than 0.6, and most preferably less than 0.4. The lower limit is preferably 0.1 or more, more preferably 0.15 or more, and even more preferably 0.2 or more. The ratio (pigment dispersant/resin) of the content of the pigment dispersant (total content of the pigment dispersant included in the nonaqueous ink composition) to the content of the resin (binder resin not including a pigment dispersant) (total content of the resin included in the nonaqueous ink composition) is preferably 0.1 or more and less than 1.0, more preferably 0.15 or more and less than 0.8, even more preferably 0.2 or more and less than 0.7, particularly preferably 0.2 or more and less than 0.6, and most preferably 0.2 or more and less than 0.4.

In the nonaqueous ink composition according to this embodiment, the content of the resin (binder resin not including a pigment dispersant) (total content of the resin included in the nonaqueous ink composition) is preferably greater than the total of the content of the pigment (total content of the pigments included in the nonaqueous ink composition) and the content of the pigment dispersant (total content of the pigment dispersant included in the nonaqueous ink composition). This further improves the glossiness of the printed surface of the resulting printed material, and the coloring property, abrasion resistance, or solvent resistance becomes excellent, so that the nonaqueous ink composition further satisfies the properties required for a nonaqueous ink composition ejected by an inkjet method. The ratio of the sum of the content of the pigment (total content of the pigment included in the nonaqueous ink composition) and the content of the pigment dispersant (total content of the pigment dispersant included in the nonaqueous ink composition) to the content of the resin (binder resin not including a pigment dispersant) (total content of the resin included in the nonaqueous ink composition) in the nonaqueous ink composition, ((pigment + pigment dispersant)/resin), is preferably less than 1.0, more preferably less than 0.95, and even more preferably less than 0.9. The lower limit is preferably 0.1 or more, more preferably 0.5 or more, and even more preferably 0.6 or more. The ratio of the sum of the content of the pigment (total content of the pigments included in the nonaqueous ink composition) and the content of the pigment dispersant (total content of the pigment dispersant included in the nonaqueous ink composition) to the content of the resin (binder resin not including a pigment dispersant) (total content of the resin included in the nonaqueous ink composition), ((pigment + pigment dispersant)/resin), is preferably 0.1 or more and less than 1.0, more preferably 0.5 or more and less than 0.95, and even more preferably 0.6 or more and less than 0.9.

In the nonaqueous ink composition according to this embodiment, the content of the resin (binder resin not including a pigment dispersant) (total content of the resin included in the nonaqueous ink composition) is preferably greater than the sum of the total content of the pigment A1, the pigment A2, and the pigment A3, and the content of the pigment dispersant (total content of the pigment dispersant included in the nonaqueous ink composition). This further improves the glossiness of the printed surface of the resulting printed material, and the coloring property, abrasion resistance, or solvent resistance becomes excellent, so that the nonaqueous ink composition further satisfies the properties required for a nonaqueous ink composition ejected by an inkjet method. The ratio of the sum of the total content of the pigment A1, the pigment A2, and the pigment A3 and the content of the pigment dispersant (total content of the pigment dispersants included in the nonaqueous ink composition) to the content of the resin (binder resin not including a pigment dispersant) (total content of the resin included in the nonaqueous ink composition) in the nonaqueous ink composition, (((pigment A1 + pigment A2 + pigment A3) + pigment dispersant)/resin), is preferably less than 1.0, more preferably less than 0.95, and even more preferably less than 0.9. The lower limit is preferably 0.1 or more, more preferably 0.5 or more, and even more preferably 0.6 or more. The ratio of the sum of the total content of the pigment A1, the pigment A2, and the pigment A3 and the content of the pigment dispersant (total content of the pigment dispersant included in the nonaqueous ink composition) to the content of the resin (binder resin not including a pigment dispersant) (total content of the resin included in the nonaqueous ink composition), (((pigment A1 + pigment A2 + pigment A3) + pigment dispersant) /resin), is preferably 0.1 or more and less than 1.0, more preferably 0.5 or more and less than 0.95, and even more preferably 0.6 or more and less than 0.9.

In the nonaqueous ink composition according to this embodiment, the content of the resin (binder resin not including a pigment dispersant) (total content of the resin included in the nonaqueous ink composition) is preferably greater than the sum of the content of the pigment dispersant (total content of the pigment dispersant included in the nonaqueous ink composition) and the content of the surfactant (total content of the surfactant included in the nonaqueous ink composition). The ratio of the sum of the content of the pigment dispersants (total content of the pigment dispersants included in the nonaqueous ink composition) and the content of the surfactants (total content of the surfactants included in the nonaqueous ink composition) to the content of the resin (binder resin not including a pigment dispersant) (total content of the resin included in the nonaqueous ink composition) in the nonaqueous ink composition, ((pigment dispersant + surfactant)/resin), is preferably less than 1.0, more preferably less than 0.8, and even more preferably less than 0.6. The lower limit is preferably 0.1 or more, more preferably 0.2 or more, and particularly preferably 0.3 or more. The ratio of the sum of the content of the pigment dispersant (total content of the pigment dispersant included in the nonaqueous ink composition) and the content of the surfactant (total content of the surfactant included in the nonaqueous ink composition) to the content of the resin (binder resin not including a pigment dispersant) (total content of the resin included in the nonaqueous ink composition), ((pigment dispersant + surfactant)/resin), is preferably 0.1 or more and less than 1.0, more preferably 0.2 or more and less than 0.8, and particularly preferably 0.3 or more and less than 0.6.

The type of resin is not particularly limited, and examples thereof include acrylic resins (including copolymers such as styrene-acrylic resins), polystyrene resins, polyester resins, vinyl chloride resins, vinyl acetate resins, vinyl chloride vinyl acetate copolymer resins, polyethylene resins, polyurethane resins, rosin-modified resins, phenol resins, terpene resins, polyamide resins, vinyltoluene-α-methylstyrene copolymers, ethylenevinyl acetate copolymers, cellulose resins (for example, cellulose acetate butyrate, cellulose acetate propionate, and the like), silicone (silicon) resins, acrylamide resins, epoxy resins, polyether resins, polycarbonate resins, or copolymer resins thereof. Among these, resins including acrylic resins, vinyl chloride resins, cellulose resins, polyester resins, and polyurethane resins are preferable, and resins including acrylic resins, vinyl chloride resins, and cellulose resins are more preferable.

The acrylic resin is not particularly limited as long as it includes a (meth)acrylic acid ester monomer as a main component of constituting monomers. The acrylic resin may be a homopolymer of one type of radical polymerizable monomer, or a copolymer using selected two or more types of radical polymerizable monomers. In particular, the acrylic resin preferable for the nonaqueous ink composition according to this embodiment is a homopolymer of methyl methacrylate, or a copolymer of methyl methacrylate and at least one compound selected from the group consisting of butyl methacrylate, ethoxyethyl methacrylate, and benzyl methacrylate. Examples of commercially available (meth)acrylic resins include "Paraloid B99N", "Paraloid B60", "Paraloid B66", "Paraloid B82", and the like, manufactured by Rohm and Haas.

The vinyl chloride resin may be either a homopolymer made of vinyl chloride monomer or a copolymer consisting of two or more selected polymerizable monomers. Examples of the copolymer of vinyl chloride resins include vinyl chloride-vinyl acetate copolymer resin. Vinyl chloride-vinyl acetate copolymer resin is a polymer of vinyl chloride monomer and vinyl acetate monomer. Examples of the vinyl chloride vinyl acetate copolymer resins include a vinyl chloride vinyl acetate copolymer, a vinyl chloride/vinyl acetate/maleic acid copolymer, a vinyl chloride/vinyl acetate/vinyl alcohol copolymer, a vinyl chloride/vinyl acetate/hydroxyalkyl acrylate copolymer, and mixtures thereof. The above-mentioned vinyl chloride vinyl acetate copolymer resins can be available and used from Nissin Chemical Industry Co., Ltd. under the trade names "SOLBIN C, CL, CNL, CLL, CLL2, C5R, TA2, TA3, A, AL, TA5R, M5" and the like.

Vinyl chloride-vinyl acetate copolymer resin can be obtained by polymerizing vinyl chloride monomer and vinyl acetate monomer. The polymerization method may be any conventionally known polymerization method. The polymerization method is preferably emulsion polymerization or suspension polymerization, and more preferably suspension polymerization.

Cellulose resins are resins with a cellulose skeleton obtained by biologically or chemically introducing a functional group into cellulose as a raw material. Examples of the cellulose resins include cellulose acetate alkylate resins such as cellulose acetate butyrate resin, cellulose acetate propionate resin, and cellulose acetate propionate butyrate resin, cellulose acetate resin, nitrocellulose resin, and mixtures thereof. The above-mentioned cellulose resins can be available and used from EASTMAN under the trade names of "CAB551-0.01", "CAB551-0.2", "CAB553-0.4", "CAB531-1", "CAB381-0.1", "CAB381-0.5", "CAB381-2", "CAB381-20", "CAP504", "CAP482-0.5", and the like.

The polyester resin includes at least a structural unit obtained by polycondensation of an alcohol component and a carboxylic acid component. The polyester resin may include a modified polyester resin. The polyester resins can be available and used from TOYOBO CO., LTD. under the trade names of "VYLON226", "VYLON270", "VYLON560", "VYLON600", "VYLON630", "VYLON660", "VYLON885", "VYLONGK250", "VYLONGK810", "VYLON GK890", and the like, or from UNITIKA, LTD. under the trade names of "elitleUE-3200", "elitleUE-3285", "elitleUE-3320", "elitleUE-9800", "elitleUE-9885", and the like.

The polyurethane resin includes at least a structural unit obtained by copolymerizing an alcohol component and an isocyanate component. The polyurethane resin may include a polyurethane resin modified with polyester, polyether, or caprolactone. The above-mentioned polyurethane resin can be available and used from Arakawa Chemical Industries, Ltd., under the trade names of "UREARNO KL-424", "UREARNO KL-564", "UREARNO KL-593", "UREARNO 3262", and the like, or from DIC Corporation under the trade names of "PANDEX 372E", "PANDEX 390E", "PANDEX 394E", "PANDEX 304", "PANDEX 305E", "PANDEX P-870", "PANDEX P-910", "PANDEX P-895", "PANDEX 4030", "PANDEX 4110", and the like.

The acrylic resin, vinyl chloride resin, cellulose resin, polyester resin, and polyurethane resin may be used alone, but it is preferable to use two of them in combination, and it is more preferable to use a resin in which an acrylic resin and a vinyl chloride resin are mixed. Depending on the content ratio of the acrylic resin and the vinyl chloride resin, it is possible to control so as to satisfy the requirements of the nonaqueous ink composition, such as coloring, drying properties, coating film properties, and printability. When an acrylic resin and a vinyl chloride resin are mixed, the mixing ratio is not particularly limited and can be changed as appropriate.

Furthermore, these resins preferably have a weight average molecular weight of 10,000 or more, more preferably 15,000 or more, even more preferably 20,000 or more, and even more preferably 25,000 or more. This can improve the abrasion resistance of the printed surface of the obtained printed material. When the resin molecular weight is expressed as an absolute molecular weight |Mw|, it is preferably 20,000 or more, more preferably 25,000 or more, and even more preferably 30,000 or more. This can improve the properties required for a nonaqueous ink composition ejected by the inkjet method due to the coating resistance of the resulting printed material.

The content of the resin (binder resin not including a pigment dispersant) in the nonaqueous ink composition according to this embodiment is not particularly limited, but is preferably contained in a range of 0.05% by mass or more, more preferably contained in the range of 0.1% by mass or more, and even more preferably contained in the range of 0.5% by mass or more in the total amount of the nonaqueous ink composition. This can further improve the surface dryness of the resulting recorded material. The resin (binder resin not including a pigment dispersant) contained in the nonaqueous ink composition is preferably contained in the range of 20.0% by mass or less, more preferably contained in the range of 15.0% by mass or less, and even more preferably contained in the range of 10.0% by mass or less, in the total amount of the nonaqueous ink composition. This can more effectively eliminate clogging in the nozzles of the inkjet head and improve the storage stability of the nonaqueous ink composition. The content of the resin in the nonaqueous ink composition according to this embodiment is preferably in the range of 0.05% by mass or more and 20.0% by mass or less, more preferably in the range of 0.1% by mass or more and 15.0% by mass or less, and even more preferably in the range of 0.5% by mass or more and 10.0% by mass or less, in the total amount of the nonaqueous ink composition.

### [Organic solvent]

The nonaqueous ink composition according to this embodiment contains an organic solvent. The organic solvent is capable of dispersing or dissolving each component contained in the nonaqueous ink composition according to this embodiment. Note that the organic solvent does not necessarily have to be a solvent for dissolving all the components contained, and may be a dispersion medium for dispersing at least a part of the components contained. The organic solvent is not particularly limited, but from the viewpoint of more effectively achieving the effects of the present invention, by dispersing the pigment and, it is preferable to contain an organic solvent B (at least one selected from the group consisting of an alkylamide-based solvent, a cyclic amide-based solvent, and a cyclic ester-based solvent). Furthermore, from the viewpoint of improving the ejection property of the nonaqueous ink composition and more effectively achieving the effects of the present invention, it is preferable to contain an organic solvent C (a glycol ether-based solvent) together with the organic solvent B. Note that it is not essential that the nonaqueous ink composition according to this embodiment contains the organic solvent B or the organic solvent C.

Hereinafter, alkylamide-based solvents, cyclic amide solvents, and cyclic ester solvents contained in organic solvent B, the glycol ether solvents contained in organic solvent C, and the other organic solvents, are respectively described.

### [Organic solvent B]

### (1) Alkylamide-based solvent

Alkylamide-based solvents are compounds having an alkyl group (CₙH₂ₙ₊₁-) and a -C(=O)-N- group (amide bond), and are solvents including a compound consisting of hydrogen or an alkyl group and a - C(=O)-N- group. As the alkylamide-based solvent, for example, one having the following structure can be preferably used. Note that an alkylamide-based solvent is not essential for the organic solvent of the present invention, and an organic solvent that does not contain an alkylamide-based solvent (excluding an alkylamide-based solvent) may also be used. 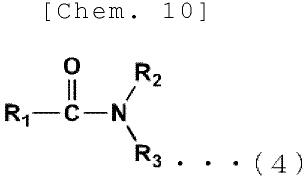 (In the formula (4), R₁ is a hydrogen atom or an alkyl group having 1 to 4 carbon atoms, and R₂ and R₃ each independently represent a hydrogen atom or an alkyl group having 1 to 4 carbon atoms.

In addition, R₂ and R₃ in the formula (4) are preferably alkyl groups having 1 to 4 carbon atoms, and more preferably alkyl groups having 2 to 4 carbon atoms. 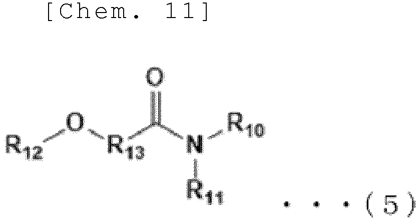 (In the formula (5), R₁₀, R₁₁ and R₁₂ each independently is a hydrogen atom or an alkyl group having 1 to 4 carbon atoms, and R₁₃ represents an alkylene group having 1 to 4 carbon atoms.)

Specific examples of the alkylamide solvents include alkoxyamide solvents such as 3-methoxypropanamide, 3-butoxypropanamide, N,N-dimethyl-3-methoxypropanamide, N,N-dibutyl-3-methoxypropanamide, N,N-dibutyl-3-butoxypropanamide, and N,N-dimethyl-3-butoxypropanamide, formamide, acetamide, propanamide, butanamide, isobutylamide, pentanamide, N-methylformamide, N-methylacetamide, N-methylpropanamide, N-methylbutanamide, N-methylisobutylamide, N-methylpentanamide, N-ethylformamide, N-ethylacetamide, N-ethylpropanamide, N-ethylbutanamide, N-ethylisobutylamide, N-ethylpentanamide, N-propylformamide, N-propylacetamide, N-propylpropanamide, N-propylbutanamide, N-propylisobutylamide, N-propylpentanamide, N-isopropylformamide, N-isopropylacetamide, N-isopropylpropanamide, N-isopropylbutanamide, N-isopropylisobutylamide, N-isopropylpentanamide, N-butylformamide, N-butylacetamide, N-butylpropanamide, N-butylbutanamide, N-butylisobutylamide, N-butylpentanamide, N,N-dimethylformamide, N,N-dimethylacetamide, N,N-dimethylpropanamide, N,N-dimethylbutanamide, N,N-dimethylisobutylamide, N,N-dimethylpentanamide, N,N-diethylformamide, N,N-diethylacetamide, N,N-diethylpropanamide, N,N-diethylbutanamide, N,N-diethylisobutylamide, N,N-diethylpentanamide, N,N-dipropylformamide, N,N-dipropylacetamide, N,N-dipropylpropanamide, N,N-dipropylbutanamide, N,N-dipropylisobutylamide, N,N-dipropylpentanamide, N,N-diisopropylformamide, N,N-diisopropylacetamide, N,N-diisopropylpropanamide, N,N-diisopropylbutanamide, N,N-diisopropylisobutylamide, N,N-diisopropylpentanamide, N,N-dibutylformamide, N,N-dibutylacetamide, N,N-dibutylpropanamide, N,N-dibutylbutanamide, N,N-dibutylisobutylamide, N,N-dibutylpentanamide, N-ethyl-N-methylformamide, N-ethyl-N-methylacetamide, N-ethyl-N-methylpropanamide, N-ethyl-N-methylbutanamide, N-ethyl-N-methylisobutylamide, N-ethyl-N-methylpentanamide, N-methyl-N-propylformamide, N-methyl-N-propylacetamide, N-methyl-N-propylpropanamide, N-methyl-N-propylbutanamide, N-methyl-N-propylisobutylamide, N-methyl-N-propylpentanamide, N-ethyl-N-propylformamide, N-ethyl-N-propylacetamide, N-ethyl-N-propylpropanamide, N-ethyl-N-propylbutanamide, N-ethyl-N-propylisobutylamide, and N-ethyl-N-propylpentanamide. Among these, from the viewpoint of particularly achieving the effects of the present invention, an alkylamide solvent represented by the formula (4) is preferable, and it is more preferable that the solvent contains at least one selected from the group consisting of N,N-diethylformamide, N,N-diethylacetamide, N,N-dipropylformamide, N,N-dibutylformamide, N,N-diethylpropanamide, N,N-dipropylpropanamide, N-ethylformamide, and N-ethylacetamide, and it is even more preferable that the solvent contains at least one selected from the group consisting of N,N-diethylformamide, N,N-diethylpropanamide, and N,N-diethylacetamide.

The content of the alkylamide solvent is not particularly limited, but the lower limit of the content of the alkylamide solvent is preferably in a range of 1% by mass or more, more preferably in a range of 5% by mass or more, and even more preferably in a range of 8% by mass or more, in the total amount of the nonaqueous ink composition.

The upper limit of the alkylamide solvent content is preferably 90% by mass or less, more preferably 80% by mass or less, and even more preferably 75% by mass or less, in the total amount of the nonaqueous ink composition.
The range of the content of the alkylamide solvent is preferably 1% by mass or more and 90% by mass or less, more preferably 5% by mass or more and 80% by mass or less, and even more preferably 8% by mass or more and 75% by mass or less, in the total amount of the nonaqueous ink composition.

### (2) Cyclic amide solvents

Cyclic amide solvents are solvents having a cyclic structure in which the cyclic structure includes a -C(=O)-N- group. For example, cyclic amide solvents having the following structure can be preferably used. 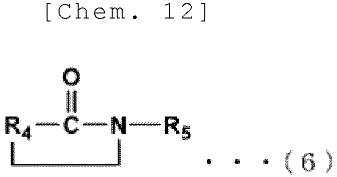 (In the formula (6), R₄ is an alkylene group having 3 to 5 carbon atoms, and R₅ represents hydrogen atom or an alkyl group having 1 to 2 carbon atoms.) 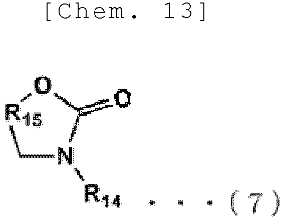 (In the formula (7), R₁₄ is an alkyl group or an unsaturated hydrocarbon group having 1 to 4 carbon atoms which may be branched, and R₁₅ represents an alkylene group having 1 to 4 carbon atoms.) 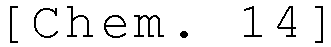 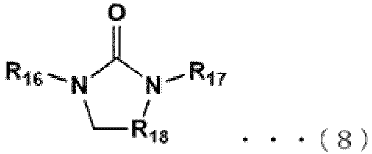 (In the formula (8), R₁₆ and R₁₇ are each independently an alkyl group having 1 to 4 carbon atoms which may be branched, and R₁₈ represents an alkylene group having 2 to 4 carbon atoms.)

Specific examples of the cyclic amide solvents include oxazolidinone solvents such as 3-methyl-2-oxazolidinone, 3-ethyl-2-oxazolidinone, and N-vinylmethyloxazolidinone, imidazolidinone solvents such as 1,3-dimethyl-2-imidazolidinone, 1-methyl-3-ethyl-2-imidazolidinone, and 1,3-diethyl-2-imidazolidinone, N-methylcaprolactam, N-ethylcaprolactam, N-acetylcaprolactam, ε-caprolactam, N-vinylcaprolactam, 2-pyrrolidone, N-methyl-2-pyrrolidone, N-ethyl-2-pyrrolidone, N-propyl-2-pyrrolidone, N-ethyl-ε-caprolactam, N-propyl-ε-caprolactam, N-methyl-ε-caprolactam, and the like. Among these, from the viewpoint of particularly achieving the effects of the present invention, a cyclic amide solvent represented by the formula (6) is preferable, and it is preferable that the solvent contains at least one selected from the group consisting of N-methylcaprolactam, N-ethylcaprolactam, N-acetylcaprolactam, ε-caprolactam, N-vinylcaprolactam, 2-pyrrolidone, N-methyl-2-pyrrolidone, N-ethyl-2-pyrrolidone, N-propyl-2-pyrrolidone, N-ethyl-ε-caprolactam, N-propyl-ε-caprolactam, and N-methyl-ε-caprolactam, and it is more preferable that the solvent contains at least one selected from the group consisting of ε-caprolactam, N-methylcaprolactam, and N-vinylcaprolactam.

The content of the cyclic amide solvent is not particularly limited, but the lower limit of the content of the cyclic amide solvent is preferably 1% by mass or more, more preferably in a range of 5% by mass or more, and even more preferably in a range of 8% by mass or more, in the total amount of the nonaqueous ink composition.

The upper limit of the content of the cyclic amide solvent is preferably 90% by mass or less, more preferably 80% by mass or less, and even more preferably 75% by mass or less, in the total amount of the nonaqueous ink composition. The range of the content of the cyclic amide solvent is preferably 1% by mass or more and 90% by mass or less, more preferably 5% by mass or more and 80% by mass or less, and even more preferably 8% by mass or more and 75% by mass or less, in the total amount of the nonaqueous ink composition.

### (3) Cyclic ester solvent

Examples of solvents having a cyclic ester structure include cyclic carbonate solvents, lactone solvents, and the like.

As the lactone-based solvent, for example, solvents having the following structure can be preferably used. 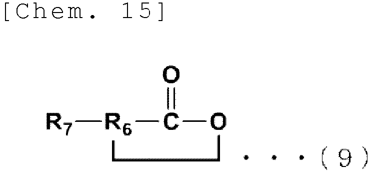 (In the formula (9), R₆ is an alkylene group having 3 to 5 carbon atoms, and R₇ represents hydrogen atom or an alkyl group having 1 to 2 carbon atoms.) Note that R₆ is more preferably an alkylene group having 4 to 5 carbon atoms, and more preferably an alkylene group having 5 carbon atoms.

Cyclic carbonate ester solvents that can be preferably used include those having the following structure. 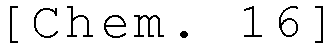 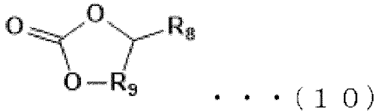 ... (10)
(In the formula (7), R₈ is a hydrogen atom or an alkyl group having 1 to 4 carbon atoms, and R₉ represents an alkylene group having 1 to 3 carbon atoms.)

Examples of the lactone-based solvent include γ-butyrolactone, α-methylene-γ-butyrolactone, δ-valerolactone, γ-hexanolactone, δ-hexanolactone, ε-caprolactone, γ-valerolactone, γ-hexalactone, γ-heptanolactone, γ-octalactone, γ-nonalactone, γ-decalactone, γ-undecalactone, δ-heptalactone, δ-octalactone, δ-nonalactone, δ-decalactone, δ-undecalactone, γ,γ-dimethyl-γ-butyrolactone, α-methyl-γ-butyrolactone, γ-clotolactone, α-methylene-γ-butyrolactone, β-methyl-γ-butyrolactone, 6-methylvalerolactone, and the like.
Among these, γ-butyrolactone, δ-valerolactone, δ-hexanolactone, ε-caprolactone, and γ-valerolactone are more preferable, and ε-caprolactone is even more preferable.

Specific examples of the cyclic carbonate ester solvents include propylene carbonate, ethylene carbonate, and the like.

The content of the cyclic ester solvent is not particularly limited, but the lower limit of the content of the cyclic ester solvent is preferably in a range of 1% by mass or more, more preferably in a range of 5% by mass or more, and even more preferably in a range of 8% by mass or more, in the total amount of the nonaqueous ink composition.

The upper limit of the content of the cyclic ester solvent is preferably 90% by mass or less, more preferably 70% by mass or less, and even more preferably 50% by mass or less, in the total amount of the nonaqueous ink composition. The range of the content of the cyclic ester solvent is preferably in a range of 1% by mass or more and 90% by mass or less, more preferably in a range of 5% by mass or more and 70% by mass or less, and even more preferably in a range of 8% by mass or more and 50% by mass or less, in the total amount of the nonaqueous ink composition.

By containing an organic solvent B, the pigments containing the pigment A1, the pigment A2, and the pigment A3 can be dispersed more effectively, and the storage stability and cleaning recovery property of the nonaqueous ink composition can be improved. Furthermore, the nonaqueous ink composition has high surface dryness on the base material, resulting in less bleeding of the print and clearer prints.

The organic solvent B is sufficiently effective when at least one of alkylamide solvents, cyclic amide solvents, and cyclic ester solvents is included, but two or more solvents of the organic solvents B may be mixed. When two or more solvents are mixed, the balance of storage stability, member suitability, surface drying property, and cleaning recovery property can be arbitrarily achieved. When two or more types are mixed, the lower limit of the total content of the organic solvent B is preferably in a range of 1% by mass or more, more preferably 5% by mass or more, and even more preferably in a range of 10% by mass or more, in the total amount of the nonaqueous ink composition. The upper limit of the total content of the organic solvent B is preferably 90% by mass or less in the total amount of the nonaqueous ink composition. The range of the total content of the organic solvent B is preferably 1% by mass or more and 90% by mass or less, more preferably 5% by mass or more and 90% by mass or less, and even more preferably 10% by mass or more and 90% by mass or less, in the total amount of the nonaqueous ink composition.

### [Organic solvent C]

The organic solvent C is a glycol ether dialkyl solvent in which the OH groups at both ends of glycol are alkyl-substituted, or a glycol ether monoalkyl solvent in which one of the OH groups of glycol is alkyl-substituted.

The glycol ether dialkyl solvent is represented by the following general formula.

Rₐ-(-O-R_{b}-)ₙ-O-R_{c} (11)

(In the formula (11), Rₐ is an alkyl group having 1 to 8 carbon atoms which may be branched, R_{b} is an alkylene group having 1 to 4 carbon atoms which may be branched, and R_{c} is an alkyl group having 1 or more and 8 or less carbon atoms which may be branched. n represents an integer of 1 to and 6.)

Note that Rₐ is preferably an alkyl group having 1 to 4 carbon atoms which may be branched. R_{b} is preferably an alkylene group having 1 or more and 3 or less carbon atoms which may be branched. R_{c} is preferably hydrogen or an alkyl group having 1 or more and 4 or less carbon atoms which may be branched.

Rₐ-(-O-Rₑ)ₙ-O-H (12)

(In the formula (12), R_{d} is an alkyl group having 1 or more and 8 or less carbon atoms which may be branched, Rₑ represents an alkyl group having 1 or more and 4 or less carbon atoms which may be branched, and n represents an integer of 1 or more and 6 or less.)

Note that R_{d} is preferably an alkyl group having 1 or more and 4 or less carbon atoms which may be branched. Rₑ is preferably an alkylene group having 1 or more and 3 or less carbon atoms which may be branched.

Examples of the glycol ether dialkyl solvents represented by formula (11) include ethylene glycol dibutyl ether, ethylene glycol dipropyl ether, diethylene glycol dimethyl ether, diethylene glycol diethyl ether, diethylene glycol methyl ethyl ether, diethylene glycol dipropyl ether, diethylene glycol propyl methyl ether, diethylene glycol dibutyl ether, diethylene glycol butyl methyl ether, diethylene glycol butyl ethyl ether, diethylene glycol methyl-2-ethylhexyl ether, triethylene glycol dimethyl ether, triethylene glycol diethyl ether, triethylene glycol ethyl methyl ether, tetraethylene glycol dimethyl ether, and tetraethylene glycol diethyl ether, tetraethylene glycol ethyl methyl ether, propylene glycol dimethyl ether, propylene glycol diethyl ether, propylene glycol ethyl methyl ether, propylene glycol methyl propyl ether, propylene glycol methyl butyl ether, propylene glycol methyl-2-ethylhexyl ether, dipropylene glycol dimethyl ether, dipropylene glycol diethyl ether, dipropylene glycol ethyl methyl ether, dipropylene glycol methyl propyl ether, dipropylene glycol dipropyl ether, dipropylene glycol methyl butyl ether, tripropylene glycol dimethyl ether, tripropylene glycol diethyl ether, tripropylene glycol ethyl methyl ether, and the like.

From the viewpoint of permeability into the base material onto which the nonaqueous ink composition is ejected, leveling properties and dryness on the base material surface, preferable examples include diethylene glycol dimethyl ether, diethylene glycol diethyl ether, diethylene glycol ethyl methyl ether, diethylene glycol dipropyl ether, diethylene glycol propyl methyl ether, diethylene glycol dibutyl ether, diethylene glycol butyl methyl ether, diethylene glycol butyl ethyl ether, diethylene glycol methyl-2-ethylhexyl ether, triethylene glycol dimethyl ether, triethylene glycol diethyl ether, triethylene glycol ethyl methyl ether, tetraethylene glycol dimethyl ether, propylene glycol diethyl ether, propylene glycol ethyl methyl ether, propylene glycol methyl propyl ether, propylene glycol methyl butyl ether, propylene glycol methyl-2-ethylhexyl ether, dipropylene glycol dimethyl ether, dipropylene glycol diethyl ether, dipropylene glycol ethyl methyl ether, dipropylene glycol methyl propyl ether, dipropylene glycol dipropyl ether, tripropylene glycol dimethyl ether, tripropylene glycol ethyl methyl ether, and the like.

Examples of the glycol ether monoalkyl solvents represented by the formula (12) include ethylene glycol monomethyl ether, ethylene glycol monoisopropyl ether, ethylene glycol mono-n-butyl ether, ethylene glycol mono-isobutyl ether, ethylene glycol mono-t-butyl ether, ethylene glycol mono-n-hexyl ether, ethylene glycol mono-2-ethylhexyl ether, diethylene glycol monomethyl (or ethyl, propyl, isopropyl, n-butyl, isobutyl, t-butyl, 2-ethylhexyl) ether, triethylene glycol monomethyl (or ethyl, propyl, isopropyl, n-butyl, isobutyl, t-butyl, 2-ethylhexyl) ether, tetraethylene glycol monomethyl ether, tetraethylene glycol monoethyl ether, tetraethylene glycol monopropyl ether, tetraethylene glycol monoisopropyl ether, tetraethylene glycol mono-n-butyl ether, tetraethylene glycol monoisobutyl ether, and tetraethylene glycol mono-t-butyl. ether, tetraethylene glycol monopentyl ether, tetraethylene glycol mono-n-hexyl ether, tetraethylene glycol mono-2-ethylhexyl ether, propylene glycol monomethyl ether, propylene glycol monoethyl ether, propylene glycol monopropyl ether, propylene glycol monoisopropyl ether, propylene glycol mono-n-butyl ether, propylene glycol mono-isobutyl ether, propylene glycol mono-t-butyl ether, propylene glycol monopentyl ether, propylene glycol mono-2-ethylhexyl ether, dipropylene glycol monomethyl (or ethyl, propyl, isopropyl, n-butyl, isobutyl, t-butyl, 2-ethylhexyl) ether, tripropylene glycol monomethyl (or ethyl, propyl, isopropyl, n-butyl, isobutyl, t-butyl) ether, tetrapropylene glycol monomethyl ether (or ethyl, propyl, isopropyl, n-butyl, isobutyl, t-butyl, 2-ethylhexyl), and the like.

Among these, preferable examples include diethylene glycol monomethyl ether, diethylene glycol monoethyl ether, diethylene glycol monopropyl ether, diethylene glycol monobutyl ether, triethylene glycol monomethyl ether, triethylene glycol monoethyl ether, triethylene glycol monopropyl ether, triethylene glycol monobutyl ether, tetraethylene glycol monomethyl ether, tetraethylene glycol monoethyl ether, tetraethylene glycol monopropyl ether, tetraethylene glycol monobutyl ether, propylene glycol monomethyl ether, propylene glycol monoethyl ether, propylene glycol monopropyl ether, propylene glycol monobutyl ether, dipropylene glycol monomethyl ether, dipropylene glycol monoethyl ether, dipropylene glycol monoethyl ether, dipropylene glycol monopropyl ether, tripropylene glycol monomethyl ether, tripropylene glycol monoethyl ether, and the like.

The preferable content of the glycol ether dialkyl solvent represented by the formula (11) is preferably 40% by mass or more, more preferably 50% by mass or more, and even more preferably 60% by mass or more, in the total amount of the nonaqueous ink composition. The preferable content of the glycol ether dialkyl solvent represented by the formula (11) is preferably 95% by mass or less, more preferably 90% by mass or less, and even more preferably 85% by mass or less, in the total amount of the nonaqueous ink composition. The preferable content of the glycol ether dialkyl solvent represented by the formula (11) is preferably 40% by mass or more and 95% by mass or less, more preferably 50% by mass or more and 90% by mass or less, and even more preferably 60% by mass or more and 85% by mass or less, in the total amount of the nonaqueous ink composition.

The preferable content of the glycol ether monoalkyl solvent represented by the formula (12) is preferably 3% by mass or more, more preferably 5% by mass or more, and even more preferably 10% by mass or more, in the total amount of the nonaqueous ink composition. The preferable content of the glycol ether monoalkyl solvent represented by the formula (12) is preferably 95% by mass or less, more preferably 90% by mass or less, and even more preferably 85% by mass or less, in the total amount of the nonaqueous ink composition. The preferable content of the glycol ether monoalkyl solvent represented by the formula (12) is preferably 3% by mass or more and 95% by mass or less, more preferably 5% by mass or more and 90% by mass or less, and even more preferably 10% by mass or more and 85% by mass or less, in the total amount of the nonaqueous ink composition.

Furthermore, it is preferable to combine two or more of these organic solvents C with different flash points. When an organic solvent C with a high flash point (for example, a flash point of 70°C or higher) is contained, a nonaqueous ink composition with high cleaning recovery properties is obtained. When an organic solvent C with a low flash point (for example, a flash point of less than 70°C) is contained, a nonaqueous ink composition with high surface drying properties on a base material is obtained. When an organic solvent C with a flash point of 70°C or higher and an organic solvent C with a flash point of less than 70°C are contained, both high cleaning recovery properties and surface drying properties on a base material can be achieved, resulting in achieving a nonaqueous ink composition that particularly effectively exhibits the effects of the present invention.

### [Other organic solvents]

The nonaqueous ink composition according to this embodiment may contain an organic solvent other than the above-mentioned organic solvent B and organic solvent C. Specific examples thereof include organic solvents including acetate-based solvents such as ethylene glycol monomethyl (or ethyl, propyl, isopropyl, n-butyl, isobutyl, t-butyl, pentyl, n-hexyl, 2-ethylhexyl) ether acetate, diethylene glycol monomethyl (or ethyl, propyl, isopropyl, n-butyl, isobutyl, t-butyl, pentyl, n-hexyl, 2-ethylhexyl) ether acetate, triethylene glycol monomethyl (or ethyl, propyl, isopropyl, n-butyl, isobutyl, t-butyl, pentyl, n-hexyl, 2-ethylhexyl) ether acetate, propylene glycol monomethyl (or ethyl, propyl, isopropyl, n-butyl, isobutyl, t-butyl, pentyl, n-hexyl, 2-ethylhexyl) ether acetate, dipropylene glycol monomethyl (or ethyl, propyl, isopropyl, n-butyl, isobutyl, t-butyl, pentyl, n-hexyl, 2-ethylhexyl) ether acetate, tripropylene glycol monomethyl (or ethyl, propyl, isopropyl, n-butyl, isobutyl, t-butyl, pentyl, n-hexyl, 2-ethylhexyl) ether acetate, ethylene glycol diacetate, diethylene glycol diacetate, propylene glycol diacetate, dipropylene glycol diacetate, 1-methoxy-2-propyl acetate, 3-methoxybutyl acetate, 2-methylbutyl acetate, 3-methoxybutyl ether acetate, and cyclohexyl acetate; alkyl alcohols having 1 to 5 carbon atoms, such as methyl alcohol, ethyl alcohol, n-propyl alcohol, isopropyl alcohol, n-butyl alcohol, secbutyl alcohol, tert-butyl alcohol, isobutyl alcohol, and n-pentanol; monohydric alcohols such as 3-methoxy-3-methyl-1-butanol, 3-methoxy-1-propanol, 1-methoxy-2-propanol, and 3-methoxy-n-butanol; ketones or ketoalcohols such as acetone, methyl ethyl ketone, methyl n-propyl ketone, methyl isopropyl ketone, methyl n-butyl ketone, methyl isobutyl ketone, methyl n-amyl ketone, methyl hexyl ketone, methyl isoamyl ketone, diethyl ketone, ethyl n-propyl ketone, ethyl isopropyl ketone, ethyl n-butyl ketone, ethyl isobutyl ketone, di-n-propyl ketone, diisobutyl ketone, cyclopentanone, cyclohexanone, methylcyclohexanone, isophorone, and acetyl ketone; ethers such as tetrahydrofuran and dioxane; oxyethylene or oxypropylene copolymers such as polyethylene glycol and polypropylene glycol; diols such as ethylene glycol, propylene glycol, diethylene glycol, dipropylene glycol, 1,3-propanediol, isobutylene glycol, triethylene glycol, tripropylene glycol, tetraethylene glycol, 1,3-propanediol, 2-methyl-1,2-propanediol, 2-methyl-1,2-propanediol, 1,2-butanediol, 1,3-butanediol, 1,4-butanediol, 1,2-pentanediol, 1,2-hexanediol, 1,5-pentanediol, 1,6-hexanediol, 2-methyl-2,4-pentanediol, 3-methyl-1,3-butanediol, 3-methyl-1,5-pentanediol, and 2-methyl-2,4-pentanediol; triols such as glycerin, trimethylolethane, trimethylolpropane, and 1,2,6-hexanetriol; tetrahydric alcohols such as mesoerythritol and pentaerythritol; alkanolamines such as monoethanolamine, diethanolamine, triethanolamine, N-methylethanolamine, N-ethylethanolamine, N-butylethanolamine, N-methyldiethanolamine, N-ethyldiethanolamine, and N-butyldiethanolamine; acetate esters such as methyl acetate, ethyl acetate, n-propyl acetate, isopropyl acetate, n-butyl acetate, isobutyl acetate, hexyl acetate, and octyl acetate; lactate esters such as methyl lactate, ethyl lactate, butyl lactate, propyl lactate, ethylhexyl lactate, amyl lactate, and isoamyl lactate; dibasic acid esters such as dimethyl oxalate, diethyl oxalate, dimethyl malonate, diethyl malonate, dipropyl malonate, dimethyl succinate, diethyl succinate, dimethyl glutarate, and diethyl glutarate; saturated hydrocarbons such as n-hexane, isohexane, n-nonane, isononane, dodecane, and isododecane; unsaturated hydrocarbons such as 1-hexene, 1-heptene, and 1-octene; cyclic saturated hydrocarbons such as cyclohexene, cycloheptene, cyclooctene, cyclodecane, and decalin; cyclic unsaturated hydrocarbons such as cyclohexene, cycloheptene, cyclooctene, 1,1,3,5,7-cyclooctatetraene, and cyclododecene; aromatic hydrocarbons such as benzene, toluene, and xylene; cyclic compounds such as sulfolane; morpholines such as N-methylmorpholine, N-ethylmorpholine, N-formylmorpholine, N-hydroxyethylmorpholine, and 4-acetylmorpholine; organic solvents such as terpenebased solvents; and which do not fall under the above-mentioned organic solvents B and C. It is preferable to select a solvent with an appropriate HLB value depending on the resin and the dispersant to be combined with.

The content of other organic solvents is not particularly limited, but the lower limit of the content of other organic solvents is preferably in a range of 10% by mass or more, more preferably in a range of 20% by mass or more, and even more preferably in a range of 30% by mass or more, in the total amount of the nonaqueous ink composition. The upper limit of the content of other organic solvents is preferably in a range of 90% by mass or less, more preferably in a range of 85% by mass or less, and even more preferably in a range of 80% by mass or less, in the total amount of the nonaqueous ink composition.

### [Surfactant]

A surfactant may be added to the nonaqueous ink composition according to this embodiment for the purposes of suppressing volatilization of the nonaqueous ink composition in devices such as the nozzle part or inside the tube, preventing solidification, or improving resolubility when solidified, for the purposes of reducing the surface tension and improving wettability with the recording medium (base material), for the purposes of suppressing bleeding of the ink composition on the base material, for the purposes of improving the abrasion resistance of the coating film, or for the purposes of further improving glossiness of a recorded material. Note that surfactants also include those called surface conditioners, leveling agents, defoamers, and the like.

Among these, it is preferable that the surfactant contains a surfactant having a siloxane skeleton. The pigment A, the pigment B, and the pigment C tend to aggregate easily in nonaqueous ink compositions, and the volume average particle diameter tends to become large. This may lead to a decrease in glossiness of the resulting recorded material. By containing a surfactant having a siloxane skeleton in the nonaqueous ink composition according to this embodiment, glossiness of the resulting recorded material can be improved even when the pigment A is contained. In addition, with a nonaqueous ink containing a surfactant having a siloxane skeleton, it is possible to appropriately adjust the bleeding of the print, and to obtain a recorded material with improved abrasion resistance.

As surfactants having a siloxane skeleton, polyester-modified silicone or polyether-modified silicone is preferably used. Specific examples include BYK-313, 315N, 322, 326, 331, 347, 348, BYK-UV3500, 3510, 3530, 3570 (all manufactured by BYK Japan), and the like.

Furthermore, the nonaqueous ink composition according to this embodiment may contain a surfactant other than the surfactant having a siloxane skeleton. Examples thereof include polyoxyalkylene alkyl ethers such as NONION P-208, P-210, P-213, E-202S, E-205S, E-215, K-204, K-220, S-207, S-215, A-10R, A-13P, NC-203, NC-207 (manufactured by NOF CORPORATION), EMULGEN 106, 108, 707, 709, A-90, A-60 (manufactured by Kao Corporation), FLOWLENG-70, D-90, TG-740W (manufactured by KYOEISHA CHEMICAL Co., Ltd.), and Poem J-0081HV (manufactured by RIKEN VITAMIN CO., LTD.), and aliphatic phosphate esters such as ADEKA TOL NP-620, NP-650, NP-660, NP-675, NP-683, NP-686, ADEKA COL CS-141E, TS-230E (manufactured by ADEKA CORPORATION), SORGEN 30V, 40, TW-20, TW-80, NOIGEN CX-100 (manufactured by DKS Co., Ltd.), and the like. As the fluorine-based surfactant, it is preferable to use a fluorine-modified polymer, and specific examples thereof includes BYK-340 (manufactured by BYK Japan), and the like. As the acetylene glycolbased surfactant, specific examples include Surfynol (registered trademark) 82, 104, 465, 485, TG (all manufactured by Air Products Japan), Olfine (registered trademark) STG, E1010 (all manufactured by Nissin Chemical Co., Ltd.), and the like. The surfactant is not limited to the above, and any of anionic, cationic, amphoteric or nonionic surfactants can be used.

The nonaqueous ink composition according to this embodiment may contain these surfactants together with a surfactant having a siloxane skeleton, or may contain these surfactants without containing a surfactant having a siloxane skeleton.

In the nonaqueous ink composition according to this embodiment, the content of the surfactant is not particularly limited, but the lower limit of the content of the surfactant is preferably in a range of 0.01% by mass or more, more preferably in a range of 0.05% by mass or more, and even more preferably in a range of 0.1% by mass or more. The lower limit of the content of the surfactant is preferably in a range of 5.0% by mass or less, more preferably in a range of 4.0% by mass or less, even more preferably in a range of 3.0% by mass or less, and even more preferably in a range of 1.5% by mass or less. When the surfactant content is in the above-mentioned range, it is possible to obtain excellent coating film properties such as abrasion resistance, solvent resistance, and water resistance of the ink coating film of the printed material. The surfactant content is preferably in a range of 0.01% by mass or more and 5.0% by mass or less, more preferably in a range of 0.05% by mass or more and 4.0% by mass or less, and even more preferably in a range of 0.1% by mass or more and 3.0% by mass or less.

### [Other components]

The nonaqueous ink composition according to this embodiment may include, as optional components, well-known additives such as stabilizers such as antioxidants and ultraviolet absorbers, epoxidized products, polycarboxylic acids, pH adjusters, bactericides, antiviral agents, preservatives, deodorants, charge adjusters, and wetting agents. Specific examples of antioxidants include hindered phenol-based antioxidants, amine-based antioxidants, phosphorus-based antioxidants, sulfur-based antioxidants, and hydrazine-based antioxidants. Specific examples include BHA (2,3-butyl-4-oxyanisole), BHT (2,6-di-t-butyl-p-cresol), and the like. Furthermore, as the ultraviolet absorbers, benzophenone-based compounds or benzotriazole-based compounds can be used. Furthermore, specific examples of the epoxidized products include epoxy glycerides, epoxy fatty acid monoesters, and epoxy hexahydrophthalates, and specific examples include ADK CIZER 0-130P, ADK CIZER 0-180A (manufactured by ADEKA CORPORATION), and the like. Specific examples of polycarboxylic acids include citric acid and maleic acid.

### (Viscosity and surface tension of nonaqueous ink composition)

The viscosity of the nonaqueous ink composition according to this embodiment is not particularly limited, and is preferably selected appropriately depending on the ejection type. For example, from the viewpoint of inkjet ejection property and ejection stability, the viscosity at 25°C is preferably 15.0 mPa·s or less, more preferably 13.0 mPa·s or less, and even more preferably 10.0 mPa·s or less. Furthermore, the viscosity at 25°C of the nonaqueous ink composition according to this embodiment is preferably 1.0 mPa·s or more, more preferably 2.0 mPa·s or more, and even more preferably 3.0 mPa·s or more. The viscosity at 25°C of the nonaqueous ink composition according to this embodiment is preferably 1.0 mPa·s or more and 15.0 mPa·s or less, more preferably 2.0 mPa·s or more and 13.0 mPa·s or less, and even more preferably 3.0 mPa·s or more and 10.0 mPa·s or less.

Furthermore, the surface tension of the nonaqueous ink composition according to this embodiment is not particularly limited, and is preferably selected appropriately depending on the ejection form. For example, from the viewpoint of the ejection properties, the ejection stability, and the leveling properties on the base material of the inkjet, the surface tension at 25°C is preferably 20 mN/m or more, more preferably 22 mN/m or more, and even more preferably 24 mN/m or more. The surface tension of the nonaqueous ink composition according to this embodiment is preferably 40 mN/m or less, more preferably 37 mN/m or less, and even more preferably 35 mN/m or less. The surface tension of the nonaqueous ink composition according to this embodiment at 25°C is preferably 20 mN/m or more and 40 mN/m or less, more preferably 22 mN/m or more and 37 mN/m or less, and even more preferably 24 mN/m or more and 35 mN/m or less.

### <<2. Method for producing nonaqueous ink composition>>

The method for producing the nonaqueous ink composition according to this embodiment can be carried out by mixing an organic solvent, a pigment containing the pigment A1, the pigment A2, and the pigment A3, and other components (for example, a pigment dispersant, a resin, and the like) using a paint shaker.

At this time, each component may be dispersed using zirconia beads. Furthermore, the obtained nonaqueous ink composition may be degassed as necessary to adjust the amount of dissolved oxygen and dissolved nitrogen to a desired amount.

The nonaqueous ink composition according to this embodiment is a nonaqueous ink composition that does not intentionally contain water, but water may contaminate from raw materials or during the manufacturing process. The water content in the nonaqueous ink composition is desirably as little as possible.

In this case, it is preferable to remove water included in an organic solvent in advance. By removing the water included in the organic solvent in advance, the amount of water contained in the nonaqueous composition can be reduced. Examples of methods for removing the water included in the organic solvent include a method of spraying an inert gas (for example, nitrogen gas) dried under an inert gas atmosphere such as nitrogen for a predetermined period of time, a method of distilling and purifying the organic solvent, a method of allowing the organic solvent to pass through a semi-permeable membrane that selectively allows water to pass through, and a method of selectively adsorbing the water mixed in the organic solvent to a water adsorbent that adsorbs water.

### <<3. Recording method using nonaqueous ink composition>>

The recording method according to this embodiment is a recording method of ejecting the above-mentioned nonaqueous ink composition onto the surface of a base material by an inkjet method. The nonaqueous ink composition of the present invention satisfies the properties required for a nonaqueous ink composition to be ejected by an inkjet method, and satisfies the properties required for a nonaqueous ink composition to be ejected by an inkjet method also in the recording method according to this embodiment.

The method of ejection by the inkjet method is not particularly limited and may be a piezoelectric method using a piezoelectric element, a thermal method using a heating element, or an electrostatic method. The inkjet method may be a serial head method or a line head method, and is not particularly limited. In addition, application to the base material may be carried out by a method other than the inkjet method, by, for example, using a spray or a dispenser.

### <<4. Method for producing recorded material>>

A recording method using the above-mentioned nonaqueous ink composition can also be defined as a method for producing a recorded material. The method for producing a recorded material according to this embodiment also satisfies the properties required for a nonaqueous ink composition ejected by an inkjet method. Furthermore, a recorded material can also be produced by applying to a base material by a method other than the inkjet method, for example, using a spray or a dispenser.

### <<5. Ink set>>

The ink set according to this embodiment is an ink set including the above-mentioned nonaqueous ink composition. By setting the content ratio of the pigment and the pigment dispersant, and the content ratio of the pigment and the resin within a predetermined range, the above-mentioned nonaqueous ink composition satisfies the properties required for a nonaqueous ink composition ejected by an inkjet method even when a pigment having a predetermined structure is used as the pigment, and therefore the same effects can be obtained with the ink set according to this embodiment.

For example, when the above-mentioned nonaqueous ink composition is a green ink or a blue ink, combining it with a conventionally known yellow ink, magenta ink, cyan ink, or black ink makes it possible to achieve the effects of the present invention and to expand color reproducibility. Furthermore, light magenta, light cyan, light black, orange, red, violet, white, and the like, may be combined with the yellow ink, magenta ink, cyan ink, or black ink.

Furthermore, an ink set may include the above-mentioned nonaqueous ink composition and a bright ink such as a metallic ink or a pearl ink. Furthermore, an ink set may include the above-mentioned nonaqueous ink composition, and a clear ink, a pre-coating ink, an overprint ink, and the like.

### <<6. Recorded material>>

The recorded material according to this embodiment includes a base material and a layer of the above-mentioned nonaqueous ink composition formed on the base material. By setting the ratio of the content of the pigment and the pigment dispersant, and the ratio of the content of the pigment and the resin in the nonaqueous ink composition to a predetermined range, the above-mentioned nonaqueous ink composition satisfies the properties required for a nonaqueous ink composition ejected by an inkjet method even when a pigment having a predetermined structure is used as the pigment, and therefore the recorded material according to this embodiment also is a recorded material having high image reproducibility.

Hereinafter, each layer constituting the recorded material in this embodiment is described.

### [Medium (recording medium)]

The base material (recording medium) that can be used in the recording method according to this embodiment is not particularly limited, and non-absorbent base materials such as a resin base material, a metal plate glass, or an absorbent base material such as paper or fabric cloth, or base materials such as a base material including a receiving layer, which is subjected to surface coating, may be used, and various types of base materials can be used.

Examples of the non-absorbent base materials include resin base materials such as polyester resin, polypropylene synthetic paper, polyolefin resin (polypropylene resin, polyethylene resin, and the like), acrylic resin, styrene resin, polycarbonate resin, ABS resin, vinyl chloride resin, and polyimide resin, and metals, metal foil-coated paper, glass, synthetic rubber, and natural rubber.

Examples of the absorbent base material include woody paper, medium-quality paper, high-quality paper, synthetic paper, cotton, synthetic fabric, silk, hemp, fabric, nonwoven fabric, leather, and the like.

Examples of the surface-coated base material include coated paper, art paper, cast paper, lightweight coated paper, lightly coated paper, and the like.

Among these, in particular, when a nonaqueous ink composition that intentionally does not contain water is used, the compositions having a surface mainly consisting of resin are preferable. Examples of the resin include polyvinyl chloride polymers, acrylic, PET, polycarbonate, PE, PP, and the like. Furthermore, resin base materials (so-called resin base materials for lamination) that are intended to have a film laminated to the recording surface of a recorded material may be used. In particular, base materials (recording media) having a surface consisting of hard or soft polyvinyl chloride polymers are preferable. Examples of the base materials (recording media) having a surface consisting of polyvinyl chloride polymers include polyvinyl chloride base materials (films or sheets), and the like.

### [Layer of the nonaqueous ink composition]

The layer of the nonaqueous ink composition is a layer formed by volatilization of a solvent included in the above-mentioned nonaqueous ink composition, and is a layer on which a desired image is formed. Since the above-mentioned nonaqueous ink composition satisfies the properties required for a nonaqueous ink composition ejected by an inkjet method, a layer of the nonaqueous ink composition with high image reproducibility can be formed.

### [Other layer]

The recorded material according to this embodiment may further include a layer having a desired function on the layer of the nonaqueous ink composition. For example, an overcoat layer containing at least one of a resin and a wax may be formed for the purpose of further imparting abrasion resistance and glossiness to the recorded material. Furthermore, a layer including a surface with concave and convex impression (matte surface) may be formed by, for example, allowing a filler to be contained or changing a film thickness in pixel units. Furthermore, a weather-resistant layer including an ultraviolet absorber, a light stabilizer, or the like, or a bright layer including a bright pigment may be formed in order to impart weather resistance to the recorded material.

Note that in the recorded material according to this embodiment, a recorded material including a layer formed from the above-mentioned nonaqueous ink composition has been described, but, for example, the above-mentioned ink composition may be ejected onto a layer formed from a conventionally known ink composition to form a layer of the nonaqueous ink composition. Also, the above-mentioned ink composition may be ejected onto a layer formed from the above-mentioned ink composition to form a layer of a second nonaqueous ink composition.

### <<7. Inkjet recording apparatus >>

The apparatus according to this embodiment is an inkjet recording apparatus equipped with a storage container filled with the above-mentioned nonaqueous ink composition, and ejects the above-mentioned nonaqueous ink composition onto a base material. This apparatus is an apparatus for producing a recorded material by ejecting the above-mentioned nonaqueous ink composition onto the surface of a base material. Since the above-mentioned nonaqueous ink composition satisfies the properties required for a nonaqueous ink composition ejected by an inkjet method, a recorded material with high image reproducibility can be produced.

The inkjet recording apparatus is preferably an inkjet recording apparatus capable of inkjet ejecting the above-mentioned nonaqueous ink composition onto a base material. As the inkjet recording apparatus that ejects the above-mentioned nonaqueous ink composition by the inkjet method, a conventionally known apparatus can be used. For example, an inkjet printer such as VersaArt RE-640 or VersaCAMM VS300i (both manufactured by Roland DG Corporation) can be used.

An example of the configuration of the inkjet recording apparatus may be an on-carriage type that is a serial printer type inkjet recording apparatus, an off-carriage type inkjet recording apparatus in which the ink cartridge is fixed externally, or a line printer type inkjet recording apparatus in which the inkjet head does not move and ejects the nonaqueous ink composition onto the recording medium (base material).

Furthermore, the inkjet recording apparatus preferably includes a heating mechanism and a fixing mechanism for fixing the base material. The heating mechanism included in the inkjet recording apparatus controls a surface temperature of the base material, and the nonaqueous ink composition that has landed on the base material (recording medium) is dried, making it possible to volatilize the solvent contained in the nonaqueous ink composition.

Furthermore, the fixing mechanism for fixing the base material makes it possible to dry the nonaqueous ink composition in a state in which the base material (recording medium) is fixed, to prevent uneven heating caused when the base material is bent.

The heating mechanism included in the inkjet recording apparatus may be a pre-heater, platen heater, after-heater, and the like, a mechanism for blowing hot air on the recorded material, or a mechanism for heating the recorded material with infrared rays, and the like. Furthermore, a combination of multiple of these heating mechanisms may be used.

The fixing mechanism for fixing the base material is not particularly limited, and may be a fixing mechanism that fixes the base material with a specified jig or a fixing mechanism that sucks and adsorbs the base material by negative pressure.

The inkjet head that ejects the above-mentioned nonaqueous ink composition is not particularly limited, and may be a piezoelectric inkjet head that uses a piezoelectric element or a thermal inkjet head that uses a heating element.

Furthermore, the inkjet recording apparatus may also be configured to include a plastic tube that connects a container (such as an ink cartridge or a bottle) for storing the above-mentioned nonaqueous ink composition to an inkjet ejection port that ejects the above-mentioned nonaqueous ink composition, and the above-mentioned nonaqueous ink composition is supplied to an inkjet head through the plastic tube and ejected by an inkjet method.

Furthermore, it is preferable that the tube connected to the storage mechanism and the inkjet ejection port is provided with a valve mechanism for adjusting the flow path of the nonaqueous ink composition. By supplying the above-mentioned nonaqueous ink composition from the inkjet ejection port to a storage mechanism via a valve mechanism, a mechanism that can eliminate nozzle clogging is provided, and the ejection stability of the nonaqueous ink composition can be further improved.

Furthermore, as described above, the inkjet recording apparatus according to this embodiment can be used for inks of various colors such as yellow, magenta, cyan, and black, as well as various inks such as light magenta, light cyan, light black, orange, red, violet, white, metallic, pearl, clear, pre-coating, and overprint, and there are no particular limitations on the order of colors to be printed or the position or configuration of the head. Furthermore, the inkjet recording apparatus according to this embodiment may or may not include a winding mechanism for the recording medium (base material), a drying mechanism for drying the base material surface, and an ink circulation mechanism.

### EXAMPLES

Hereinafter, the present invention will be described in more detail with reference to Examples, but the present invention is not limited to these descriptions in any way.
1. Preparation of nonaqueous ink composition Nonaqueous ink compositions of Examples and Comparative Examples were prepared so that each component of organic solvents, resins, dispersants, and pigments (coloring materials) is in the rate shown in the following Table. Specifically, the nonaqueous ink compositions were prepared by dispersion with zirconia beads using a paint shaker until the volume-based cumulative 90% particle diameter (D90) was 300 nm or less. The units are % by mass.

The volume-based cumulative 90% particle diameter (D90) of the pigment included in the nonaqueous ink composition was measured using a particle diameter distribution measuring device (NANOTRACWAVE: manufactured by MicrotracBEL Corp.).

### 2. Evaluation

### (Ejection property)

The nonaqueous ink compositions of the Examples, Comparative Examples, and Reference Examples were evaluated for ejection property (ejection stability). Specifically, an inkjet printer (VersaArt RE-640: manufactured by Roland DG Corporation) was filled with the nonaqueous ink composition, and solid and fine lines were printed by continuous printing on a recording medium (polyvinyl chloride film with adhesive (IMAGin JT5829R: manufactured by MACtac)) in a bidirectional high-speed printing mode (360x720 dpi) at a base material surface temperature of 40°C, and the presence or absence of dot missing, ink flight bending, and ink splash were visually observed and evaluated (represented as "ejection property" in the table).

### Evaluation criteria:

A: Fine lines are reproduced correctly.
B: Slight displacement in landing position is observed, but fine lines are generally reproduced correctly.
C: Fine lines cannot be reproduced due to displacement in landing position.
A and B are within a practically usable range.

### (Storage stability)

The nonaqueous ink compositions of Examples and Comparative Examples was evaluated for storage stability. Specifically, the nonaqueous ink compositions were filled and sealed in glass bottles and stored at 60°C for one month, and the change rate in viscosity with respect to that before storage was determined. Note that the ink viscosity was measured at 20°C using a falling ball viscometer (AMVn: manufactured by Anton Paar).
A: Change rate is less than 10%.
B: Change rate is 10% or more and less than 20%.
C: Change rate is 20% or more.
A and B are within a practically usable range.

### (Coloring property)

The nonaqueous ink compositions of Examples and Comparative Examples were evaluated for coloring property. Specifically, a solid image was printed on a recording medium (polyvinyl chloride film with paste (IMAGin JT5829R: manufactured by MACtac)) in a high quality print mode (1440x720 dpi) using the above-mentioned inkjet printer (VersaArt RE-640: manufactured by Roland DG Corporation). Saturation was determined by measuring in accordance with JIS Z 8721 using a colorimeter (X-Rite eXact: manufactured by X-Rite Corporation) under conditions of a viewing angle of 2°, a measurement range of 4 mmφ, and a D65 light source. (represented as "coloring property" in the table).

### Evaluation Criteria

A: Saturation is 90 or more.
B: Saturation is 70 or more and less than 90.
C: Saturation is less than 70.
A and B are within a practically usable range.

### (Gloss)

The nonaqueous ink compositions of the Examples, Comparative Examples, and Reference Examples were evaluated for gloss. Specifically, a printed material was prepared in the same manner as in the above-mentioned evaluation of the coloring property, and the 20° gloss degree of the printed material was measured using a gloss meter (PhopointIQ-S: manufactured by KONICA MINOLTA, INC.) (represented as "Gloss" in the table).

### Evaluation criteria

A: 20° gloss is 60 or more
B: 20° gloss is 55 or more and less than 60
**C:** 20° gloss is less than 55

A and B are within a practically usable range.

### (Abrasion resistance)

The nonaqueous ink compositions of Examples, Comparative Examples, and Reference Examples were evaluated for the abrasion resistance. Specifically, a printed material was prepared in the same manner as in the above-mentioned evaluations of the coloring property and the glossiness, and the printed surface of the printed material was rubbed with a dry cotton cloth moving back and forth 50 times with a load of 200 g, and the abrasion resistance was evaluated visually (represented as "abrasion resistance" in the table) .

### Evaluation Criteria

A: No rubbing marks were observed on the printed surface.
B: Slight marks were observed on the printed surface, but substantially within the acceptable range.
C: Peeling was clearly observed on the printed surface.
A and B are within a practically usable range.

### (Solvent resistance)

The nonaqueous ink compositions of Examples, Comparative Examples, and Reference Examples were evaluated for solvent resistance. Specifically, the printed surface of the printed material was rubbed with a cotton cloth soaked in a 50% by mass alcohol aqueous solution at a load of 200 g, moving back and forth 50 times, and the abrasion resistance was evaluated visually (represented as "solvent resistance" in the table) in the same manner as in the above-mentioned evaluation of abrasion resistance.

### Evaluation Criteria

A: No rubbing marks were observed on the printed surface.
B: Slight rubbing marks were observed on the printed surface, but were within the acceptable range.
C: Peeling was clearly observed on the printed surface.
A and B are within a practically usable range.

**[Table 1]**

| | | | Example 1 | Example 2 | Example 3 | Example 4 | Example 5 | Example 6 | Example 7 | Example 8 |
|---|---|---|---|---|---|---|---|---|---|---|
| Ink composition | Pigment | PB 15:6 | 3.0 | | | 3.0 | | | | |
| | | PB 60 | | 3.0 | | | | | | |
| | | PV 23 | | | | | 3.0 | | | |
| | | PG 7 | | | | | | 3.0 | | |
| | | PG 36 - a | | | | | | | 3.0 | |
| | | PG 36 - b | | | 3.0 | | | | | 3.0 |
| | Dispersant | Dispersant-a | 1.0 | 1.0 | 1.0 | 2.0 | | | 0.6 | 1.0 |
| | | Dispersant-b | | | | | 1.0 | 1.0 | | 1.0 |
| | | Dispersant-c | | | | | | | | |
| | Resin | Resin-a | 4.0 | 4.0 | 4.0 | 3.0 | 6.0 | 6.0 | 4.0 | 4.0 |
| | | Resin-b | 1.0 | 1.0 | 1.0 | 1.0 | | | | |
| | | Resin-c | | | | | | | 0.5 | 1.0 |
| | Solvent B | γ-butyrolactone | 15.0 | | | | | | | |
| | | γ-valerolactone | | 15.0 | | | | | 15.0 | 15.0 |
| | | Propylene carbonate | | | 15.0 | 15.0 | | | | |
| | | N,N-diethylpropionamide | | | | | 15.0 | | | |
| | | N,N-diethylformamide | | | | | | 15.0 | | |
| | | N-methyl-2-pyrrolidone | | | | | | | | |
| | Solvent C | Diethylene glycol diethyl ether | 65.5 | 65.5 | 65.5 | 65.5 | 10.0 | 49.0 | | |
| | | Diethylene glycol methyl ethyl ether | | | | | 64.5 | | 61.4 | 59.0 |
| | | Dipropylene glycol dimethyl ether | | | | | | 20.0 | | |
| | | Diethylene glycol butyl methyl ether | 10.0 | 10.0 | 10.0 | | | | 15.0 | 15.0 |
| | | Triethylene glycol monobutyl ether | | | | 10.0 | | | | |
| | | Dipropylene glycol monomethyl ether | | | | | | 5.5 | | |
| | Surfactant | Surfactant-a | 0.5 | 0.5 | 0.5 | 0.5 | 0.5 | 0.5 | | |
| | | Surfactant-b | | | | | | | 0.5 | 1.0 |
| | Total | | 100.0 | 100.0 | 100.0 | 100.0 | 100.0 | 100.0 | 100.0 | 100.0 |
| | Water (%) | | 0.2 | 0.1 | 0.1 | 0.1 | 0.1 | 0.1 | 0.1 | 0.1 |
| Evaluation | | Ejection property | A | A | A | A | A | A | A | A |
| | | Storage stability | A | A | A | A | A | A | A | A |
| | | Coloring | A | A | A | B | A | A | A | B |
| | | Gloss | A | A | A | B | A | A | A | B |
| | | Abrasion resistance | A | A | A | B | A | A | A | B |
| | | Solvent resistance | A | A | A | B | A | A | A | B |

**[Table 2]**

| | | | Example 9 | Example 10 | Example 11 | Example 12 | Example 13 | Example 14 | Example 15 | Example 16 |
|---|---|---|---|---|---|---|---|---|---|---|
| Ink composition | Pigment | PB 15:6 | | | | 2.0 | | | | |
| | | PB 60 | | 2.0 | | | | | | |
| | | PV 23 | | | 4.0 | | | | | |
| | | PG 7 | 4.0 | | | | | | | 2.5 |
| | | PG 36 - a | | | | | 3.0 | | | |
| | | PG 36 - b | | | | | | 2.0 | 4.0 | |
| | Dispersant | Dispersant-a | | | | 0.4 | 1.0 | 1.0 | | 0.5 |
| | | Dispersant-b | 1.2 | | | | | | 1.0 | |
| | | Dispersant-c | 1.2 | 0.5 | 1.5 | 0.5 | | | | |
| | Resin | Resin-a | 5.0 | 4.0 | 6.5 | 5.0 | 4.0 | 4.0 | 5.0 | 2.0 |
| | | Resin-b | 2.0 | 2.0 | | 2.0 | 1.0 | 1.0 | 1.0 | 2.0 |
| | | Resin-c | | | | | | | | |
| | Solvent B | γ-butyrolactone | 10.0 | 20.0 | | 20.0 | 15.0 | 15.0 | | 20.0 |
| | | γ-valerolactone | | | 15.0 | | | | | |
| | | Propylene carbonate | | | | | | | | 10.0 |
| | | N,N-diethylpropionamide | | | | | | | | |
| | | N,N-diethylformamide | | | | | | | 20.0 | |
| | | N-methyl-2-pyrrolidone | | | | | | | | |
| | Solvent C | Diethylene glycol diethyl ether | 51.2 | 36.3 | 40.0 | | 65.5 | 66.5 | 48.5 | |
| | | Diethylene glycol methyl ethyl ether | 20.0 | 30.0 | 20.0 | 63.6 | | | | 62.5 |
| | | Dipropylene glycol dimethyl ether | | | 12.5 | | | | | |
| | | Diethylene glycol butyl methyl ether | | | | | 10.0 | 10.0 | | |
| | | Triethylene glycol monobutyl ether | 5.0 | | | 6.0 | | | | |
| | | Dipropylene glycol monomethyl ether | | 5.0 | | | | | 20.0 | |
| | Surfactant | Surfactant-a | 0.2 | 0.2 | | 0.5 | 0.5 | 0.5 | | 0.5 |
| | | Surfactant-b | 0.2 | | 0.5 | | | | 0.5 | |
| | Total | | 100.0 | 100.0 | 100.0 | 100.0 | 100.0 | 100.0 | 100.0 | 100.0 |
| | Water (%) | | 0.2 | 0.1 | 0.07 | 0.3 | 0.5 | 0.05 | 0.2 | 0.4 |
| Evaluation | | Ejection property | A | A | A | A | B | A | A | B |
| | | Storage stability | A | A | A | A | B | A | A | B |
| | | Coloring | A | A | A | A | A | A | A | A |
| | | Gloss | A | A | A | A | A | A | A | A |
| | | Abrasion resistance | A | A | A | A | B | A | A | A |
| | | Solvent resistance | A | A | A | A | A | A | A | A |

**[Table 3]**

| | | | Example 17 | Example 18 | Example 19 | Example 20 | Example 21 | Example 22 | Example 23 |
|---|---|---|---|---|---|---|---|---|---|
| Ink composition | Pigment | PB 15:6 | 2.5 | | 3.0 | | | | |
| | | PB 60 | | | | 3.0 | | | |
| | | PV 23 | | | | | 3.0 | | |
| | | PG 7 | | | | | | 4.0 | |
| | | PG 36 - a | | 4.5 | | | | | 3.0 |
| | | PG 36 - b | | | | | | | |
| | Dispersant | Dispersant-a | | | 1.5 | 1.0 | | | 0.6 |
| | | Dispersant-b | | | | | 1.0 | 1.0 | |
| | | Dispersant-c | 0.5 | 0.5 | | | | 1.0 | |
| | Resin | Resin-a | | 2.0 | 4.0 | 4.0 | 6.0 | 5.0 | 4.0 |
| | | Resin-b | 2.0 | 2.0 | 1.0 | 1.0 | | 2.0 | |
| | | Resin-c | 1.0 | 1.0 | | | | | 0.5 |
| | Solvent B | γ-butyrolactone | 20.0 | | 15.0 | | | 10.0 | |
| | | γ-valerolactone | | | | 15.0 | | | 15.0 |
| | | Propylene carbonate | | | | | | | |
| | | N,N-diethylpropionamide | | | | | 15.0 | | |
| | | N,N-diethylformamidemide | | | | | | | |
| | | N-methyl-2-pyrrolidone | | 15.0 | | | | | |
| | Solvent C | Diethylene glycol diethyl ether | 38.0 | | 65.5 | 66.0 | 10.0 | 52.0 | |
| | | Diethylene glycol methyl ethyl ether | 30.5 | 30.5 | | | 65.0 | 20.0 | 61.4 |
| | | Dipropylene glycol dimethyl ether | | 34.0 | | | | | |
| | | Diethylene glycol butyl methyl ether | | 10.0 | 10.0 | 10.0 | | | 15.5 |
| | | Triethylene glycol monobutyl ether | | | | | | 5.0 | |
| | | Dipropylene glycol monomethyl ether | 5.0 | | | | | | |
| | Surfactant | Surfactant-a | | | | | | | |
| | | Surfactant-b | 0.5 | 0.5 | | | | | |
| | Total | | 100.0 | 100.0 | 100.0 | 100.0 | 100.0 | 100.0 | 100.0 |
| | Water (%) | | 0.4 | 0.1 | 0.2 | 0.1 | 0.1 | 0.2 | 0.1 |
| Evaluation | | Ejection property | B | A | A | A | A | A | A |
| | | Storage stability | B | A | A | A | A | A | A |
| | | Coloring | A | A | A | A | A | A | A |
| | | Gloss | A | A | A | A | A | A | A |
| | | Abrasion resistance | A | A | A | A | A | A | A |
| | | Solvent resistance | A | A | A | A | A | A | A |

**[Table 4]**

| | | | Comparativ e Example 1 | Comparativ e Example 2 | Comparativ e Example 3 | Comparativ e Example 4 | Comparativ e Example 5 | Comparativ e Example 6 | Comparativ e Example 7 | Comparativ e Example 8 |
|---|---|---|---|---|---|---|---|---|---|---|
| Ink composition | Pigment | PB 15:6 | 4.0 | | | | | | | |
| | | PB 60 | | 4.0 | | | | 2.0 | | |
| | | PV 23 | | | 4.0 | | | | | 3.0 |
| | | PG 7 | | | | 3.0 | | | | |
| | | PG 36 - a | | | | | 4.0 | | | |
| | | PG 36 - b | | | | | | | 3.0 | |
| | Dispersant | Dispersant-a | 4.0 | | | 6.0 | 4.0 | | | 4.0 |
| | | Dispersant-b | | 4.0 | | | | 3.0 | | |
| | | Dispersant-c | | | 4.0 | | | | 6.0 | |
| | Resin | Resin-a | 4.0 | 1.5 | 4.5 | | 1.0 | 1.5 | 2.5 | 4.0 |
| | | Resin-b | | 0.5 | 0.5 | | | 0.5 | 0.5 | 1.0 |
| | | Resin-c | | | | | 1.0 | | | |
| | Solvent B | γ-butyrolactone | 15.0 | 15.0 | 15.0 | | | | | |
| | | γ-valerolactone | | | | | | 15.0 | | |
| | | Propylene carbonate | | | | | 15.0 | | 20.0 | |
| | | N,N-diethylpropionamide | | | | | | | | |
| | | N,N-diethylformamide | | | | 15.0 | | | | |
| | | N-methyl-2-pyrrolidone | | | | | | | | 10.0 |
| | Solvent C | Diethylene glycol diethyl ether | 62.5 | 64.5 | 61.0 | | 64.5 | 67.5 | | |
| | | Diethylene glycol methyl ethyl ether | | | | 60.0 | | | 85.5 | 77.5 |
| | | Dipropylene glycol dimethyl ether | | | | | | | | |
| | | Diethylene glycol butyl methyl ether | 10.0 | 10.0 | 10.0 | 15.0 | 10.0 | 10.0 | | |
| | | Triethylene glycol monobutyl ether | | | | | | | | |
| | | Dipropylene glycol monomethyl ether | | | | | | | | |
| | Surfactant | Surfactant-a | 0.5 | 0.5 | 1.0 | | 0.5 | 0.5 | 0.5 | 0.5 |
| | | Surfactant-b | | | | 1.0 | | | | |
| | Total | | 100.0 | 100.0 | 100.0 | 100.0 | 100.0 | 100.0 | 118.0 | 100.0 |
| | Water (%) | | 0.2 | 0.1 | 0.1 | 0.2 | 2.0 | 1.0 | 0.6 | 0.8 |
| Evaluation | | Ejection property | B | B | B | C | C | C | C | C |
| | | Storage stability | B | B | B | C | C | C | C | C |
| | | Coloring | B | C | C | C | C | C | C | C |
| | | Gloss | C | C | C | C | C | C | C | C |
| | | Abrasion resistance | C | C | C | C | C | C | C | C |
| | | Solvent resistance | C | C | C | C | C | C | C | C |

**[Table 5]**

| | | | Reference Example 1 | Reference Example 2 | Reference Example 3 | Reference Example 4 |
|---|---|---|---|---|---|---|
| Ink composition | Pigment | PB15:4 | 3 | | | |
| | | PR122 | | 3 | | |
| | | PY150 | | | 3 | |
| | | CB | | | | 3 |
| | Dispersant | Dispersant-a | 4 | 4 | 4 | 4 |
| | | Dispersant-b | | | | |
| | | Dispersant-c | | | | 0.0 |
| | Resin | Resin-a | 4 | 4 | 4 | 4 |
| | | Resin-b | 1 | 1 | 1 | 1 |
| | | Resin-c | | | | |
| | Solvent B | γ-butyrolactone | 15 | 15 | 15 | 15 |
| | | γ-valerolactone | | | | |
| | | Propylene carbonate | | | | |
| | | N,N-diethylpropionamide | | | | |
| | | N,N-diethylformamide | | | | 0.0 |
| | | N-methyl-2-pyrrolidone | | | | |
| | Solvent C | Diethylene glycol diethyl ether | 62.5 | 62.5 | 62.5 | 62.5 |
| | | Diethylene glycol methyl ethyl ether | | | | |
| | | Dipropylene glycol dimethyl ether | | | | |
| | | Diethylene glycol butyl methyl ether | 10.0 | 10.0 | 10.0 | 10.0 |
| | | Triethylene glycol monobutyl ether | | | | |
| | | Dipropylene glycol monomethyl ether | | | | |
| | Surfactant | Surfactant-a | 0.5 | 0.5 | 0.5 | 0.5 |
| | | Surfactant-b | | | | |
| | Total | | 100.0 | 100.0 | 100.0 | 100.0 |
| Evaluation | | Ejection property | A | A | A | A |
| | | Storage stability | A | A | A | A |
| | | Coloring | A | A | A | A |
| | | Gloss | A | A | A | A |
| | | Abrasion resistance | A | A | A | A |
| | | Solvent resistance | A | A | A | A |

In the table, "PB15:6" is FASTOGEN BLUE AE-8K (C.I. Pigment Blue 15:6) manufactured by DIC Corporation.
In the table, "PB60" is LIONOGEN BLUE 6520 (C.I. Pigment Blue 60) manufactured by Toyo Color Co., Ltd. In the table, "PV23" is FASTOGEN SUPER VIOLET RSP (C.I. Pigment Violet 23) manufactured by DIC Corporation.
In the table, "PG7" is FASTGEN GREEN 5740 (C.I. Pigment Green 7) manufactured by DIC Corporation.
In the table, "PG36-a" is FASTGEN GREEN 2YK (C.I. Pigment Green 36) manufactured by DIC Corporation.
In the table, "PG36-b" is Cyanine Green 5370 (C.I. Pigment Green 36) manufactured by Dainichiseika Color & Chemicals Mfg. Co., Ltd.
In the table, "PB15:4" is C.I. Pigment Blue PB15:4. In the table, "PR122" is C.I. Pigment Red 122.
In the table, "PY150" is C.I. Pigment Yellow 150.
In the table, "CB" is carbon black.
In the table, "dispersant-a" is "Solsperse 32000" (polycaprolactone-based polymer dispersant, amine value: 35 mgKOH/g) manufactured by Lubrizol Corporation.
In the table, "dispersant-b" is "Solsperse 33000" (polycaprolactone-based polymer dispersant, amine value: 43 mgKOH/g) manufactured by Lubrizol Corporation.
In the table, "Dispersant-c" is "Solsperse 36000" (polycaprolactone-based polymer dispersant, amine value: 0 mgKOH/g) manufactured by Lubrizol Corporation.
In the table, "Resin-a" is "Paraloid B60" (acrylic resin) manufactured by Rohm and Haas Company.
In the table, "Resin-b" is "Solvine CL" (vinyl chloride-vinyl acetate copolymer resin) manufactured by Nissin Chemical Industry Co., Ltd.
In the table, "Resin-c" is "CAB551-0.01" (cellulose resin) manufactured by EASTMAN.
In the table, "surfactant-a" is "BYK-331" (polyester modified silicone or polyether modified silicone) manufactured by BYK Japan.
In the table, "surfactant-b" is "BYK-3500" (polyester modified silicone or polyether modified silicone) manufactured by BYK Japan.

As can be seen from the above-mentioned table, nonaqueous ink compositions of Examples, which contain the pigments A1, A2, and A3, and in which the content of the pigment dispersant is less than the content of the pigment, and the content of the resin is greater than the content of the pigment, satisfy the properties required for a nonaqueous ink composition to be ejected by the inkjet method.

The nonaqueous ink compositions of Reference Examples 1 to 4, which do not contain pigments A1, A2, or A3, satisfied the properties required of a nonaqueous ink composition to be ejected by an inkjet method, even though the content of the pigment dispersant was equal to or greater than the content of the pigment. This shows that the problem of the present invention, that is, that pigments aggregate in nonaqueous ink compositions, is unique to the nonaqueous ink compositions containing the pigments A1, A2, and A3.

## Claims

1. A nonaqueous ink composition comprising a pigment, a pigment dispersant, an organic solvent, a resin different from the pigment dispersant, and being ejected by an inkjet method,
the pigment comprising at least one or more pigments selected from the group consisting of a pigment A1 represented by the following formula (1), a pigment A2 represented by the following formula (2), and a pigment A3 represented by the following formula (3),
a content of the pigment dispersant is smaller than a content of the pigment, and
a content of the resin is greater than the content of the pigment: 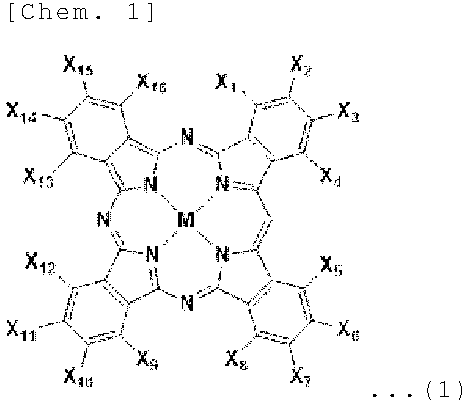
wherein in the formula (1), X₁ to X₁₆ each independently represent a halogen atom or a hydrogen atom; and
M represents a metal atom optionally including two hydrogen atoms or a ligand.

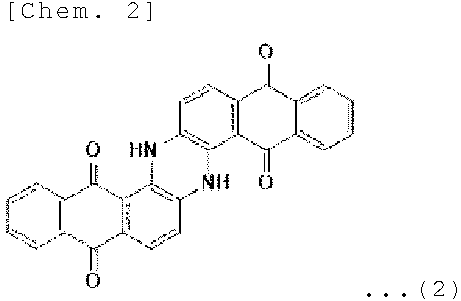

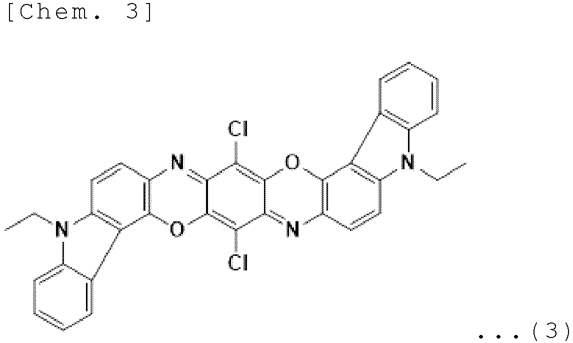

2. The nonaqueous ink composition according to claim 1, wherein the content of the resin is greater than a total content of the pigment, the pigment dispersant, and a surfactant different from the resin.

3. The nonaqueous ink composition according to claim 1 or claim 2, wherein the content of the pigment is 1.0% by mass or more.

4. The nonaqueous ink composition according to claim 1 or claim 2, wherein the content of the resin is greater than the content of the pigment dispersant.

5. The nonaqueous ink composition according to claim 1 or claim 2, wherein (the content of the pigment dispersant)/(the content of the resin) is less than 0.8.

6. The nonaqueous ink composition according to claim 1 or claim 2, wherein (the content of the pigment dispersant)/(the content of the pigment) is less than 0.45.

7. The nonaqueous ink composition according to claim 1 or claim 2, wherein a content of water in the ink composition is 0.5% by mass or less.

8. A recording method comprising ejecting the nonaqueous ink composition according to claim 1 or claim 2 to a surface of a base material by an inkjet method.

9. A method for producing a recorded material, the method comprising ejecting the nonaqueous ink composition according to claim 1 or claim 2 to a surface of a base material by an inkjet method.

10. An ink set comprising at least the nonaqueous ink composition according to claim 1 or claim 2.

11. A recorded material comprising a layer of the nonaqueous ink composition according to claim 1 or claim 2, formed on a surface of a base material.

12. An inkjet recording device comprising a storage container filled with the nonaqueous ink composition according to claim 1 or claim 2.
